# EUROPÄISCHE PATENTSCHRIFT

(11) **EP 2 842 864 B1**
(45) Veröffentlichungstag und Bekanntmachung des Hinweises auf die Patenterteilung: **03.04.2019**
(21) Anmeldenummer: 13182820.4
(22) Anmeldetag: 03.09.2013
(51) Int. Cl.: B63H 21/22, B63B 35/73, B63H 11/00, B64C 39/02, B63H 25/02

(54) **FERNBEDIENUNGSVORRICHTUNG FÜR EINE SCHWIMMENDE VORRICHTUNG MIT EINERM WASSERSTRAHLANTRIEB**
Remote control device for a floating device with a water jet propulsion
Dispositif de télécommande pour un dispositif flottant doté d'un entraînement à jet d'eau

(43) Veröffentlichungstag der Anmeldung: 04.03.2015
(73) Patentinhaber: Fieback, Tobias, 58455 Witten (DE); Ramcke, Lars, 22089 Hamburg (DE); Immel, Svetlana, 25524 Itzehoe (DE)
(72) Erfinder: Fieback, Tobias, 58455 Witten (DE); Ramcke, Lars, 22089 Hamburg (DE); Immel, Svetlana, 25524 Itzehoe (DE)
(74) Vertreter: RGTH

(56) Entgegenhaltungen:
- WO-A1-2007/067599
- WO-A2-2011/100654
- US-A- 5 041 040
- US-A1- 2005 085 141
- US-A1- 2012 060 738

## Beschreibung

### Technisches Gebiet

Die Erfindung betrifft eine Fernbedienungsvorrichtung zur Fernbedienung einer schwimmenden Vorrichtung mit einem Wasserstrahlantrieb zur Erzeugung eines Wasserstrahls. Dabei besteht die Fernbedienungsvorrichtung aus einer ersten Bedieneinheit zur Aufnahme der Steuerdaten sowie aus mindestens einer Stelleinheit zur Steuerung und/oder Einstellung einer Leistung des Wasserstrahlantriebs sowie vorzugsweise zur Steuerung und/oder Einstellung weiterer Funktionen der schwimmenden Vorrichtung. Dies erlaubt die Fernbedienung einer schwimmenden Vorrichtung, beispielsweise eines Jet-Skis, von einer zur schwimmenden Vorrichtung beabstandeten Anordnung, beispielsweise von einem wasserstrahlgetriebenem Sportgerät.

### Stand der Technik

Aus der US 7,258,301 B2 ist beispielsweise ein Wassersportgerät bekannt, welches aus einer speziellen Bootseinheit sowie einer externen Flugeinheit besteht. Von der Bootseinheit wird über eine Hochleistungspumpe Wasser angesaugt und über einen Schlauch zur Flugeinheit weitergeleitet. Diese Flugeinheit kann auf den Rücken einer Person geschnallt werden. Das von der Bootseinheit angesaugte Wasser wird als Wasserstrahl über den Schlauch an die Flugeinheit weitergeleitet. Über zwei manuell steuerbare Düsen an der Flugeinheit wird der Wasserstrahl wieder ausgestoßen. Aufgrund der Rückstoßwirkung steigt die Person je nach Stellung der Düsen und eingeregelter Leistung der Hochleistungspumpe in die Höhe.

Durch die WO 2013/041 787 A1 ist eine Wasserstrahlumlenkvorrichtung, welche aus einem Rohrsystem besteht, zum Anschluss an einen Jet-Ski bekannt. Mittels dieser Wasserstrahlumlenkvorrichtung kann die externe Flugeinheit mit einem handelsüblichen Jet-Ski verbunden werden.

In der US 5,041,040 A wird ein Jetski zum Ziehen eines Wasserskifahreres beschrieben. Der Wasserskifahrer ist über eine Seilverbindung mit dem Jetski verbunden. Am Ende der Seilverbindung ist ein Handgriff mit einer Fernbedienungsvorrichtung zur Steuerung des Jetski angeordnet. Die Signale zur Steuerung werden über eine Kabelverbindung zum Jetski gesendet und dieser basierend auf den empfangenen Signalen mittels eines elektronischen Moduls angesteuert.

Durch die US 2012/060,738 A1 ist eine Fernbedienungsvorrichtung in Form eines Armbands für Wasserskifahrer bekannt. Die Steuerungsdaten werden über eine drahtlose Verbindung zu einem elektronischen Modul am Jetski gesendet.

In der WO 2011/100654 A2 wird eine Antriebsvorrichtung für ein Surfboard beschrieben. Der Antrieb am Surfboard kann über eine Fernbedienungsvorrichtung gesteuert werden.

Um von der externen Flugeinheit aus die Leistung des Wasserstrahlantriebs der Bootseinheit oder des Jet-Skis zu steuern, ist die Verwendung eines sehr langen, beispielsweise mindestens 10 Meter langen, Bowdenzugs bekannt. Ein derartiger Bowdenzug kann zum Beispiel am Schlauch zwischen der externen Flugeinheit und der Bootseinheit oder dem Jet-Ski angeordnet sein. An der Bootseinheit oder dem Jet-Ski kann der lange Bowdenzug mit dem Gashebel, einem mit dem Gashebel verbunden Bowdenzug der Bootseinheit oder des Jet-Skis oder direkt mit der Drosselklappe im Ansaugtrakt des Motors der Bootseinheit oder des Jet-Skis verbunden sein. Somit kann über den mechanischen Bowdenzug von der externen Flugeinheit beispielsweise die Gasgebefunktion an der Bootseinheit oder dem Jet-Ski gesteuert werden.

Nachteilig ist allerdings, dass bei Verwendung eines derartig langen Bowdenzugs die mechanische Anordnung sehr schwergängig ist und beispielsweise häufig zum Verhaken führt, sodass das Gas beispielsweise nicht mehr selbständig zurückgeht. Ferner bedarf eine derartige Anordnung häufiger und aufwendiger Wartung.

### Beschreibung der Erfindung: Aufgabe, Lösung und Vorteile

Aufgabe der vorliegenden Erfindung ist es, eine Fernbedienungsvorrichtung zur Fernbedienung einer schwimmenden Vorrichtung mit einem Wasserstrahlantrieb bereitzustellen, welche derart flexibel ausgestaltet ist, dass diese ohne aufwendige Umbaumaßnahmen an bekannten schwimmenden Vorrichtungen mit Wasserstrahlantrieb, beispielsweise Jet-Skis oder Jet-Booten, betrieben werden kann und weniger fehleranfällig sowie robuster als die aus dem Stand der Technik bekannte Lösung ist.

Diese Aufgabe wird mit einer Fernbedienungsvorrichtung gemäß Anspruch 1 der vorliegenden Erfindung gelöst.

Hiernach wird erfindungsgemäß eine Fernbedienungsvorrichtung zur Fernbedienung einer schwimmenden Vorrichtung mit einem Wasserstrahlantrieb zur Erzeugung eines Wasserstrahls vorgeschlagen, wobei die Fernbedienungsvorrichtung eine erste Bedieneinheit zur Aufnahme von Steuerdaten sowie mindestens eine Stelleinheit zur Steuerung und/oder Einstellung der Leistung des Wasserstrahlantriebs sowie vorzugsweise zur Steuerung und/oder Einstellung weiterer Funktionen der schwimmenden Vorrichtung aufweist. Die erste Bedieneinheit weist zum Weiterleiten der Steuerdaten einen Sender auf. Die Stelleinheit weist dagegen zum Empfangen der vom Sender weitergeleiteten Steuerdaten einen Empfänger auf.

Bei der schwimmenden Vorrichtung mit einem Wasserstrahlantrieb zur Erzeugung eines Wasserstrahls kann es sich um jede geeignete schwimmende Vorrichtung mit einem Wasserstrahlantrieb handeln. Bevorzugter Weise handelt es sich bei der schwimmenden Vorrichtung um eine schwimmende Vorrichtung zur Personenbeförderung. Beispielsweise handelt es sich hierbei um einen Jet-Ski oder ein Jet-Boot. Ein externes Gerät, beispielsweise ein wasserstrahlgetriebenes Sportgerät, kann über einen langen, beispielsweise ca. 10 Meter langen, Schlauch mittels einer Wasserstrahlumlenkvorrichtung mit der schwimmenden Vorrichtung, beispielsweise einem Jet-Ski, verbunden werden. Hierzu wird üblicherweise der Schlauch an die Auslassdüse für den Wasserstrahl, beziehungsweise an die an der Auslassdüse für den Wasserstrahl angeordnete Wasserstrahlumlenkvorrichtung angeschlossen.

Die Wasserstrahlumlenkvorrichtung dient zum flexiblen Anschluss des externen Geräts mit einer schwimmenden Vorrichtung ohne dass größere Umbaumaßnahmen an der schwimmenden Vorrichtung nötig sind. Durch die Wasserstrahlumlenkvorrichtung wird der von der schwimmenden Vorrichtung nach hinten ausgestoßene Wasserstrahl aufgenommen, vorzugsweise nach oben umgelenkt und vorzugsweise oberhalb der Wasseroberfläche entlang einer Außenfläche der schwimmenden Vorrichtung zum Bugbereich der schwimmenden Vorrichtung geleitet. Im Bugbereich kann die Wasserstrahlumlenkvorrichtung mit dem Schlauch zum Anschluss des externen Geräts verbunden werden. Bevorzugter Weise weist die Wasserstrahlumlenkvorrichtung im Wesentlichen Rohre oder/und Schläuche zur Umleitung und Weiterleitung des Wasserstrahls auf.

Die erste Bedieneinheit zur Aufnahme der Steuerdaten ist vorzugsweise beabstandet zur schwimmenden Vorrichtung anordbar, beziehungsweise angeordnet. Beispielsweise kann die erste Bedieneinheit zur Aufnahme von Steuerdaten am externen Gerät, beispielsweise dem wasserstrahlgetriebenen Sportgerät, angeordnet sein. Somit kann eine Person vom wasserstrahlgetriebenem Sportgerät über die erste Bedieneinheit Steuerdaten vorgeben, welche dann von der Stelleinheit, welche bevorzugter Weise an der schwimmenden Vorrichtung angeordnet ist, empfangen und verarbeitet werden. Hierzu kann die erste Bedieneinheit beispielsweise einen Gasgriff, bevorzugter Weise einen als Dreh-Grasgriff ausgebildeten Griff, aufweisen. Hierüber kann eine Person am wasserstrahlgetriebenen Sportgerät die gewünschte Leistung des Wasserstrahlantriebs der schwimmenden Vorrichtung vorgeben. Vorzugsweise können an der ersten Bedieneinheit weitere Steuerdaten vorgegeben werden, insbesondere Start/Stopp, Notaus, Auswahl eines Fahrmodus und/oder weitere Funktionen über Sensoren oder digitale bzw. analoge Einstellfunktionen.

Erfindungsgemäß weist die Stelleinheit ein erstes Stellglied zur mechanischen Betätigung eines der schwimmenden Vorrichtung zugeordneten Mittels zur Steuerung der Leistung des Wasserstrahlantriebs der schwimmenden Vorrichtung auf. Somit kann durch das erste Stellglied der Stelleinheit das ohnehin an der schwimmenden Vorrichtung angeordnete Mittel zur Steuerung der Leistung des Wasserstrahlantriebs mechanisch betätigt werden.

Durch das Vorsehen einer Stelleinheit mit einem ersten Stellglied zur mechanischen Betätigung eines der schwimmenden Vorrichtung zugeordneten Mittels zur Steuerung der Leistung des Wasserstrahlantriebs kann die Fernbedienungsvorrichtung an bereits bekannten schwimmenden Vorrichtungen mit Wasserstrahlantrieb, beispielsweise Jet-Skis oder Jet-Booten, verwendet werden, ohne dass größere Umbaumaßnahmen an der schwimmenden Vorrichtung notwendig sindDas der schwimmenden Vorrichtung zugeordnete Mittel zur Steuerung der Leistung des Wasserstrahlantriebs der schwimmenden Vorrichtung ist r als Hebel, insbesondere als Gashebel, ausgebildet. Jet-Skis weisen üblicherweise einen Gashebel auf, welcher als Fingergas oder als Daumengas ausgelegt ist. Die gewünschte Leistung des Wasserstrahlantriebs der schwimmenden Vorrichtung, beispielsweise des Jet-Skis, wird somit durch Drücken des Gashebels vorgegeben, beziehungsweise eingestellt.

Das erste Stellglied weist einen im Wesentlichen starr ausgebildeten Finger zum Betätigen des der schwimmenden Vorrichtung zugeordneten Mittels zur Steuerung der Leistung des Wasserstrahlantriebs der schwimmenden Vorrichtung auf. Dabei ist das erste Stellglied zur Ausübung einer Druckkraft auf das der schwimmenden Vorrichtung zugeordnete Mittel zur Steuerung der Leistung des Wasserstrahlantriebs der schwimmenden Vorrichtung ausgebildet. Unter starr ausgebildetem Finger ist im Sinne der vorliegenden Erfindung ein länglich ausgebildeter Körper, beispielsweise eine Stange, aus einem geeigneten Material, zum Beispiel Metall oder Kunststoff, zu verstehen. Dadurch, dass das erste Stellglied im Wesentlichen als starr ausgebildeter Finger sowie zur Ausübung einer Druckkraft auf das der schwimmenden Vorrichtung zugeordnete Mittel zur Steuerung der Leistung des Wasserstrahlantriebs der schwimmenden Vorrichtung ausgebildet ist, kann durch das Stellglied das Mittel zur Steuerung der Leistung des Wasserstrahlantriebs der schwimmenden Vorrichtung in ähnlicher oder identischer Weise betätigt werden, wie es üblicherweise von einer Person betätigt werden würde.

Das Mittel zur Steuerung der Leistung des Wasserstrahlantriebs der schwimmenden Vorrichtung ist als Hebel, insbesondere als Gashebel, ausgebildet. Mittels des im Wesentlichen starr ausgebildeten Fingers kann der Gashebel der schwimmenden Vorrichtung im Wesentlichen stufenlos betätigt werden und somit die Leistung des Wasserstrahlantriebs der schwimmenden Vorrichtung bestimmt und vorgegeben werden.

Durch das Vorsehen eines derart ausgebildeten ersten Stellglieds ist es möglich, die Stelleinheit an jeder bekannten schwimmenden Vorrichtung mit Wasserstrahlantrieb, beispielsweise an bekannten Jet-Skis oder Jet-Booten zu verwenden, ohne Umbaumaßnahmen an der schwimmenden Vorrichtung vorzunehmen. Beispielsweise kann somit die Stelleinheit mit dem ersten Stellglied im Bereich des Handgriffs eines Jet-Skis derart angeordnet sein, dass mittels des Stellglieds, nämlich des starr ausgebildeten Fingers, eine Druckkraft auf den Gashebel ausgeübt werden kann.

Es ist bevorzugt, dass das der schwimmenden Vorrichtung zugeordnete Mittel zur Steuerung der Leistung des Wasserstrahlantriebs der schwimmenden Vorrichtung sowohl einen Hebel, insbesondere Gashebel, sowie auch ein bewegliches Maschinenelement zur Übertragung der mechanischen Bewegung, insbesondere einen Bowdenzug, umfasst. Somit kann durch Betätigung des Hebels, beispielsweise des Gashebels, eine Zugkraft auf den Bowdenzug ausgeübt werden. Außerdem kann das der schwimmenden Vorrichtung zugeordnete Mittel zur Steuerung der Leistung des Wasserstrahlantriebs der schwimmenden Vorrichtung sowohl einen Hebel, insbesondere Gashebel, sowie auch ein mechanisch-elektrisches Wandlungselement, insbesondere einen Hall-Sensor, zum Erzeugen einer Steuerspannung für die Motorsteuerungselektronik umfassen. Somit kann beispielsweise durch Betätigung des Gashebels das mechanischelektrische Wandlungselement betätigt werden, wobei von dem mechanischelektrischen Wandlungselement die Gashebelbewegung, beziehungsweise die resultierende Gashebelstellung, in ein Spannungssignal für die Motorsteuerelektronik umgewandelt wird.

Der Sender und Empfänger sind bevorzugter Weise für eine kabelgebundene Verbindung oder für eine Funkverbindung ausgebildet. Bei Verwendung einer kabelgebundenen Verbindung kann ein Kabel beispielsweise am Schlauch zwischen der schwimmenden Vorrichtung und dem wasserstrahlgetriebenen Sportgerät angebracht und befestigt sein. Die Steuerdaten können über die kabelgebundene Verbindung in analoger oder digitaler Form übertragen werden. Ferner ist vorzugsweise vorgesehen, dass das Kabel eine einzige Drahtverbindung oder besonders bevorzugter Weise mehrere Drähte umfasst. Beispielsweise könnte die kabelgebundene Verbindung zwischen Sender und Empfänger als BUS-System zur Übertragung von BUS-Signalen ausgebildet sein.

Bei Verwendung einer Funkverbindung zwischen Sender und Empfänger werden die Steuerdaten in geeigneter Weise, besonders bevorzugter Weise im 40 MHz-Bereich, zwischen Sender und Empfänger übertragen.

Des Weiteren ist bevorzugter Weise vorgesehen, dass die Stelleinheit eine Elektronik, beispielsweise eine Hauptelektronik zur Verarbeitung der vom Empfänger empfangenen Steuerdaten aufweist. Somit dient die Elektronik der Stelleinheit als sogenannte Schaltzentrale. Hierüber können die verschiedensten Funktionen aufbereitet werden. Beispielsweise kann es sich hierbei um die Kalibrierung von empfangenen Signalen, beispielsweise Analogsignalen, sowie auch um die Kalibrierung von mechanischen Anordnungen oder Motoren, beispielsweise eines Servomotors handeln. Ferner können hierüber Funktionen, wie beispielsweise die Begrenzung der maximalen Leistung des Wasserstrahlantriebs der schwimmenden Vorrichtung und/oder die Begrenzung der maximalen Beschleunigung oder Verzögerung eingestellt und aufbereitet werden. Die Elektronik der Stelleinheit weist hierfür bevorzugter Weise eine Platine mit elektronischen Bauteilen und einen Mikrocontroller sowie eine Software auf. Dabei kann der Mikrocontroller auf der Platine der Elektronik der Stelleinheit angeordnet sein.

Des Weiteren kann die Elektronik ein Anzeigemittel, beispielsweise einen Bildschirm sowie Eingabemittel, beispielsweise Knöpfe, Schalter und Schnittstellen zum Anschluss anderer Eingabegeräte, aufweisen. Somit ist es beispielsweise möglich, dass durch die Elektronik der Stelleinheit die aktuell eingestellten Funktionen angezeigt werden. Alternativerweise oder zusätzlich zur Anzeige über einen Monitor kann die Elektronik ein Modul zur Fernanzeige, beispielsweise zur Weiterleitung der anzuzeigenden Informationen aufweisen. Dadurch können sämtliche Funktionen jederzeit auf einem von der Stelleinheit beabstandet angeordneten Rechner oder auch an der ersten Bedieneinheit und/oder einer zweiten Bedieneinheit angezeigt und überwacht werden. Ferner können über die Elektronik, beziehungsweise über Eingabemittel der Elektronik, Funktionen direkt vorgegeben werden. Auch die Eingabe der Funktionen kann als Ferneinstellmodul ausgebildet sein. Somit können die Einstellung von einem von der Stelleinheit beabstandet angeordneten Rechner oder auch von der ersten Bedieneinheit und/oder einer zweiten Bedieneinheit vorgenommen werden. Auch ist es bevorzugt, dass die Elektronik den Empfänger der Stelleinheit umfasst.

Die Steuerdaten weisen Informationen bezüglich der einzustellenden Leistung des Wasserstrahlantriebs der schwimmenden Vorrichtung auf. Bevorzugter Weise weisen die Steuerdaten zusätzlich Informationen bezüglich einer Startfunktion und/oder einer Stoppfunktion und/oder einer Notausfunktion und/oder eines Wechsels zwischen unterschiedlicher Modi, insbesondere Fahrmodi, der schwimmenden Vorrichtung auf. Somit können von der ersten Bedieneinheit nicht nur Steuerdaten bezüglich der gewünschten Leistung des Wasserstrahlantriebs der schwimmenden Vorrichtung aufgenommen werden, sondern auch weitere zusätzliche Funktionen gesteuert werden. Somit ist es beispielsweise möglich, an der ersten Bedieneinheit mittels geeigneter Eingabemittel, beispielsweise Knöpfe oder Schalter, den Wasserstrahlantrieb der schwimmenden Vorrichtung zu starten und/oder zu stoppen. Ferner kann über eine Notausfunktion von der ersten Bedieneinheit der Wasserstrahlantrieb der schwimmenden Vorrichtung im Notfall ausgeschaltet werden. Da moderne Jet-Skis oder Jet-Boote über unterschiedliche Modi, beispielsweise verschiedene Fahrmodi, verfügen, ist es ferner vorzugsweise vorgesehen, dass derartige Modi über die erste Bedieneinheit ausgewählt und eingestellt werden können. Bei den unterschiedlichen Fahrmodi kann es sich beispielsweise um einen Sportfahrmodus, einen Wasserskifahrmodus, einen Komfortmodus oder einen Eco-Fahrmodus handeln.

Bevorzugter Weise weist die Stelleinheit ein erstes lösbares Verbindungsmittel zur Verbindung der Stelleinheit mit der schwimmenden Vorrichtung auf. Dabei ist bevorzugt, dass das erste lösbare Verbindungsmittel derart ausgebildet ist, dass es zur Verbindung der Stelleinheit mit der schwimmenden Vorrichtung im Bereich des der schwimmenden Vorrichtung zugeordneten Mittels zur Steuerung der Leistung des Wasserstrahlantriebs der schwimmenden Vorrichtung anordbar ist, beziehungsweise angeordnet ist. Beispielsweise kann das Mittel zur Steuerung der Leistung des Wasserstrahlantriebs der schwimmenden Vorrichtung als Hebel, insbesondere Gashebel, am Handgriff, beispielsweise am linken oder rechten Handgriff der schwimmenden Vorrichtung angeordnet sein. Die Stelleinheit ist dann mittels des ersten lösbaren Verbindungsmittel im Bereich des Gashebels am Handgriff, beispielsweise am linken oder rechten Handgriff, der schwimmenden Vorrichtung angeordnet. Beispielsweise kann das erste lösbare Verbindungsmittel als Schelle oder Band ausgebildet sein und um den Handgriff der schwimmenden Vorrichtung herum anlegbar ausgebildet sein. Somit kann die Stelleinheit mittels einer oder mehrerer Schellen, welche um den linken oder rechten Handgriff der schwimmenden Vorrichtung, zum Beispiel des Jet-Skis, herum angeordnet sind, auf dem Handgriff befestigt sein. Ferner kann die Stelleinheit mittels des ersten lösbaren Verbindungsmittels an einer anderen geeigneten Stelle mit der schwimmenden Vorrichtung verbunden sein. Beispielsweise kann die Stelleinheit am Lenker, an der Lenkerverkleidung, am Rumpf oder an der Außenhülle der schwimmenden Vorrichtung mittels des ersten lösbaren Verbindungsmittels angeordnet sein.

Außerdem ist bevorzugt, dass das erste Stellglied zur Ausübung einer Zugkraft auf das der schwimmenden Vorrichtung zugeordnete Mittel zur Steuerung der Leistung des Wasserstrahlantriebs der schwimmenden Vorrichtung ausgebildet ist. Dabei kann das erste Stellglied mittels eines zweiten lösbaren Verbindungsmittels mit dem der schwimmenden Vorrichtung zugeordneten Mittel zur Steuerung der Leistung des Wasserstrahlantriebs der schwimmenden Vorrichtung verbindbar ausgebildet sein oder mit diesem verbunden sein. Beispielsweise kann das Mittel zur Steuerung der Leistung des Wasserstrahlantriebs der schwimmenden Vorrichtung als bewegliches Maschinenelement, zum Beispiel Bowdenzug, ausgebildet sein. Mittels des zweiten lösbaren Verbindungsmittels, beispielsweise in Form einer Klemme oder eines Hakens, kann das erste Stellglied mit dem Bowdenzug verbindbar sein, beziehungsweise mit diesem verbunden sein. Somit kann durch Ausübung einer Zugkraft auf den Bowdenzug mittels des ersten Stellgliedes die Leistung des Wasserstrahlantriebs der schwimmenden Vorrichtung vorgegeben und eingestellt werden. Auch hierbei ist die Steuerung der Leistung des Wasserstrahlantriebs der schwimmenden Vorrichtung im Wesentlichen stufenlos möglich.

Durch das Vorsehen eines derart ausgebildeten ersten Stellgliedes einer Stelleinheit kann die Stelleinheit mit bekannten schwimmenden Vorrichtungen, beispielsweise Jet-Skis oder Jet-Booten, verbunden werden ohne Umbaumaßnahmen an der schwimmenden Vorrichtung vornehmen zu müssen. Beispielsweise kann die Stelleinheit mit dem ersten Stellglied am Handgriff eines Jet-Skis mit dem Bowdenzug, welcher üblicherweise mit dem Gashebel verbunden ist, verbunden werden. Dazu kann die Verbindung zwischen Bowdenzug und Gashebel unterbrochen werden oder das erste Stellglied zusätzlich zum Gashebel mit dem Bowdenzug verbunden werden. Eine derartige Anordnung müsste auch dann nicht demontiert werden, falls die schwimmende Vorrichtung, beispielsweise der Jet-Ski, wieder als Jet-Ski verwendet wird. Alternativerweise kann das erste Stellglied im Bereich einer Drosselklappe am oder im Ansaugtrakt eines Motors der schwimmenden Vorrichtung angeordnet sein und mittels des zweiten lösbaren Verbindungsmittels mit der Drosselklappe verbunden sein.

Außerdem ist bevorzugt, dass die Stelleinheit einen Stellmotor, insbesondere einen Servomotor oder einen Seilzugmotor, zur Ansteuerung und/oder Bewegung des ersten Stellglieds aufweist. Besonders bevorzugter Weise ist dabei das erste Stellglied über einen Arm mit dem Stellmotor verbunden. Somit kann durch den Stellmotor, beispielsweise Servomotor, der Hub beziehungsweise die Strecke oder der Abstand über welchen der Gashebel der schwimmenden Vorrichtung gedrückt, beziehungsweise bewegt, werden soll vorgegeben werden. Mittels des Stellmotors wird somit das erste Stellglied, beispielsweise der starr ausgebildete Finger, gegen den Gashebel eines Jet-Skis gedrückt. Ferner kann durch den Stellmotor, beispielsweise einen Seilzugmotor, eine Zugkraft auf das Mittel zur Steuerung der Leistung des Wasserstrahlantriebs der schwimmenden Vorrichtung, beispielsweise einen Bowdenzugs, ausgeübt werden.

Die Stelleinheit kann in jeder geeigneten Weise an der schwimmenden Vorrichtung, insbesondere im Bereich des Mittels zur Steuerung der Leistung des Wasserstrahlantriebs der schwimmenden Vorrichtung angeordnet und befestigt sein. Dabei können die einzelnen Teile der Stelleinheit, beispielsweise Elektronik, erstes Stellglied, und Empfänger einzeln oder miteinander verbunden an der schwimmenden Vorrichtung angeordnet sein. Bevorzugter Weise weist die Stelleinheit aber eine erste mechanische Halterung zur Halterung des ersten Stellglieds und/oder eines Stellmotors auf. Dabei weist die erste mechanische Halterung mehrere, bevorzugter Weise mindestens drei, miteinander verbundene Elemente auf. Beispielsweise könnte eines der Elemente zur Verbindung der ersten mechanischen Halterung mit der schwimmenden Vorrichtung ausgebildet sein und ein zweites Element der ersten mechanischen Halterung zur Halterung eines Stellmotors ausgebildet sein. Dabei ist besonders bevorzugter Weise vorgesehen, dass die einzelnen Elemente der ersten mechanischen Halterung starr und aus einem festen, nicht verformbaren Material ausgebildet sind. Beispielsweise könnten die Elemente aus Metall oder Kunststoff ausgebildet sein.

Bevorzugter Weise sind mindestens drei der miteinander verbundenen Elemente der ersten mechanischen Halterung als im Wesentlichen quaderförmige Trägerprofile ausgebildet. Ein erstes Trägerprofil weist dabei an einer Längsseite zumindest eine erste Nut zur Aufnahme eines ersten Trägerprofilverbindungsmittels auf. Das zweite Trägerprofil weist vorzugsweise an einer Längsseite zumindest eine zweite Nut zur Aufnahme eines zweiten Trägerprofilverbindungsmittels auf. Ein drittes Trägerprofil weist ferner bevorzugter Weise an einer Längsseite zumindest eine dritte Nut zur Aufnahme des zweiten Trägerprofilverbindungsmittels auf. Die einzelnen Trägerprofilverbindungsmittel können dabei im Wesentlichen flach, beziehungsweise scheibenförmig, ausgebildet sein. Ferner weisen die Trägerprofilverbindungsmittel einen Stift mit einem an dessen Ende angeordnetem Kopf auf, welcher in die an den Längsseiten der Trägerprofile angeordneten Nuten einsetzbar ist. Der an dem Ende des Stifts angeordnete Kopf weist einen größeren Durchmesser als der Stift auf.

Bevorzugter Weise weist das dritte Trägerprofil an einer weiteren Längsseite zumindest eine vierte Nut und besonders bevorzugter Weise eine im Wesentlichen parallel zur vierten Nut angeordnete fünfte Nut auf. Des Weiteren ist bevorzugter Weise vorgesehen, dass das dritte Trägerprofil eine Durchbrechung oder Aussparung an einer Längsseite zur Aufnahme und/oder Befestigung eines Stellmotors aufweist. Dabei ist besonders bevorzugter Weise vorgesehen, dass die Durchbrechung oder Aussparung zur Aufnahme eines Stellmotors an derselben Längsseite angeordnet ist, an welcher auch die vierte und bevorzugte Weise fünfte Nut angeordnet sind. Somit kann der Stellmotor in geeigneter Weise mittels weiterer Verbindungsmittel in der vierten und fünften Nut des dritten Trägerprofils befestigt sein.

Ferner kann der Stellmotor mittels geeigneter Befestigungsmittel in den Nuten, nämlich der vierten und fünften Nut, des dritten Trägerprofils verschiebbar angeordnet sein.

Das erste Trägerprofil ist bevorzugter Weise an der die erste Nut aufweisenden Längsseite mittels des ersten Trägerprofilverbindungsmittels mit einer Stirnseite des zweiten Trägerprofils verbunden. Somit ist bevorzugter Weise vorgesehen, dass das zweite Trägerprofil mit einer Stirnseite auf einer Längsseite, nämlich der Längsseite mit der ersten Nut, des ersten Trägerprofils verbunden ist. Dabei ist das zweite Trägerprofil in Längsrichtung des ersten Trägerprofils entlang der ersten Nut verschiebbar angeordnet. Durch die verschiebbare Ausbildung der Trägerprofile zueinander kann die erste mechanische Halterung an jede Form und an unterschiedliche Abstände zwischen Griff und Gashebel einer schwimmenden Vorrichtung, beispielsweise Jet-Ski, angepasst werden, ohne dass dabei Umbaumaßnahmen an der schwimmenden Vorrichtung vorgenommen werden müssen.

Das zweite Trägerprofil ist mittels des zweiten Trägerprofilverbindungsmittels an der die zweite Nut aufweisenden Längsseite mit einer der die dritte Nut aufweisenden Längsseite des dritten Trägerprofils verbunden. Somit ist bevorzugter Weise das zweite Trägerprofil an einer Längsseite mit einer Längsseite des dritten Trägerprofils verbunden. Das dritte Trägerprofil ist bevorzugter Weise in Längsrichtung des zweiten Trägerprofils entlang der zweiten Nut des zweiten Trägerprofils verschiebbar angeordnet. Durch diese verschiebbare Ausgestaltung kann der Abstand zwischen dem ersten Trägerprofil und dem dritten Trägerprofil variiert und an die Abmessungen der schwimmenden Vorrichtung angepasst werden.

Des Weiteren ist bevorzugter Weise vorgesehen, dass das erste Trägerprofilverbindungsmittel derart ausgebildet ist, dass das zweite Trägerprofil um seine Längsachse drehbar auf dem ersten Trägerprofil angeordnet ist. Besonders bevorzugter Weise ist das zweite Trägerprofil um 360° um seine Längsachse drehbar auf dem ersten Trägerprofil angeordnet.

Ferner ist bevorzugter Weise vorgesehen, dass das zweite Trägerprofilverbindungsmittel derart ausgebildet ist, dass das dritte Trägerprofil um seine Querachse drehbar ist. Somit kann dadurch der Neigungswinkel zwischen dem ersten Trägerprofil und dem dritten Trägerprofil variiert und an die Abmessungen der schwimmenden Vorrichtung angepasst werden.

Bevorzugter Weise ist das erste lösbare Verbindungsmittel zur Verbindung der Stelleinheit mit der schwimmenden Vorrichtung, beispielsweise zur Verbindung der Stelleinheit mit dem Handgriff der schwimmenden Vorrichtung, mit dem ersten Trägerprofil der ersten mechanischen Halterung verbunden. Hierfür ist bevorzugter Weise vorgesehen, dass eine oder mehrere Schellen an einer Längsseite des Trägerprofils angeordnet sind.

Bevorzugter Weise ist der Winkel zwischen dem ersten Trägerprofil und dem zweiten Trägerprofil im Wesentlichen 90°. Der Winkel zwischen dem zweiten Trägerprofil und dem dritten Trägerprofil kann durch die drehbare Ausgestaltung des zweiten Trägerprofilverbindungsmittels im Wesentlichen zwischen 0° und 180° variiert werden. Das dritte Trägerprofil kann parallel zum ersten Trägerprofil angeordnet sein. Durch die drehbare Ausgestaltung des zweiten Trägerprofilverbindungsmittels kann aber auch der Winkel zwischen dem ersten Trägerprofil und dem dritten Trägerprofil zwischen 0° und 180° variiert werden.

Durch das Vorsehen einer ersten mechanischen Halterung bestehend aus mehreren, vorzugsweise drei, Trägerprofilen, wobei die einzelnen Trägerprofile verschiebbar und teilweise drehbar zueinander anordbar sind, kann die erste mechanische Halterung und somit die Stelleinheit an jede schwimmende Vorrichtung, beispielsweise jeden Jet-Ski, ohne Umbaumaßnahmen an der schwimmenden Vorrichtung angeordnet werden. Insbesondere können hierbei insgesamt fünf Freiheitsgrade beziehungsweise Variierungsmöglichkeiten erreicht werden.

Beispielsweise kann durch das Vorsehen von einer oder mehrerer Schellen als erstes lösbares Verbindungsmittel zur Verbindung der Stelleinheit mit der schwimmenden Vorrichtung die erste mechanische Halterung und somit die Stelleinheit drehbar um den Griff der schwimmenden Vorrichtung herum angeordnet und verstellt werden. Ferner kann durch das Vorsehen der Schellen als erstes lösbares Verbindungsmittel das erste Trägerprofil und somit die Stelleinheit in Längsrichtung entlang eines Handgriffs der schwimmenden Vorrichtung verschiebbar angeordnet sein. Ferner ist durch eine verschiebbar ausgebildete Verbindung zwischen dem ersten Trägerprofil und dem zweiten Trägerprofil eine verschiebbar ausgebildete Anordnung der Stelleinheit entlang der Längsrichtung eines Handgriffs der schwimmenden Vorrichtung möglich.

Des Weiteren kann durch die drehbare Ausbildung des ersten Trägerprofilverbindungsmittels zwischen erstem Trägerprofil und zweitem Trägerprofil eine Drehbarkeit der ersten mechanischen Halterung und somit der Stelleinheit um die Hochachse der ersten mechanischen Halterung beziehungsweise des zweiten Trägerprofils erreicht werden.

Durch die verschiebbare Ausgestaltung des zweiten Trägerprofilverbindungsmittels zwischen dem zweiten Trägerprofil und dem dritten Trägerprofil kann die Höhe der ersten mechanischen Halterung, beziehungsweise der Abstand der Stellmotorhalterung zum Handgriff der schwimmenden Vorrichtung variiert und eingestellt werden.

Die Neigung des ersten Stellgliedes, beispielsweise des im Wesentlichen starr ausgebildeten Fingers, kann durch die drehbare Ausgestaltung des zweiten Trägerprofilverbindungsmittels zwischen dem zweiten Trägerprofil und dem dritten Trägerprofil variiert und eingestellt werden.

Insgesamt kann somit eine sehr flexible und an jede schwimmende Vorrichtung anpassbare erste mechanische Halterung für die Stelleinheit bereitgestellt werden. Des Weiteren kann eine derartige erste mechanische Halterung und somit die Stelleinheit ohne Umbaumaßnahmen an der schwimmenden Vorrichtung in einfachster Weise mit der schwimmenden Vorrichtung verbunden werden. Beispielsweise kann die erste mechanische Halterung an einem Handgriff, an einem Lenker, an einer Lenkerverkleidung, an einem Rumpf oder an einer Außenhülle der schwimmenden Vorrichtung angeordnet sein.

Des Weiteren ist bevorzugter Weise vorgesehen, dass durch das erste elektronische Modul ein vom Mittel zur Steuerung der Leistung des Wasserstrahlantriebs der schwimmenden Vorrichtung erzeugtes Signal zur Steuerung der Leistung des Wasserstrahlantriebs der schwimmenden Vorrichtung aufgenommen wird und durch das vom ersten elektronischen Modul erzeugte Signal, insbesondere Spannungssignal, ersetzt wird sowie in die der schwimmenden Vorrichtung zugeordnete Motorelektronik zur Steuerung der Leistung des Wasserstrahlantriebs der schwimmenden Vorrichtung eingespeist wird. Alternativerweise ist vorzugsweise vorgesehen, dass das aufzunehmende Signal nicht vom Mittel zur Steuerung der Leistung des Wasserstrahlantriebs der schwimmenden Vorrichtung, sondern von einem diesem Mittel zugeordneten Sensor erzeugt wird. Somit kann beispielsweise in einfacher Weise das Signal, beispielsweise Spannungssignal, eines Gassensors, nämlich eines Sensors welcher in Abhängigkeit der Gashebelbewegung ein Spannungssignal erzeugt, abgefangen und durch ein eigens generiertes Signal ersetzt werden. Dieses Signal wird dabei von der Elektronik der Stelleinheit basierend auf den von der ersten Bedieneinheit empfangenen Steuerdaten generiert. Durch das Vorsehen eines derartigen ersten elektronischen Moduls kann ohne massive Veränderungen an der Verkabelung der schwimmenden Vorrichtung die Stelleinheit an der schwimmenden Vorrichtung angeschlossen werden. Beispielsweise kann die Stelleinheit, beziehungsweise die Elektronik der Stelleinheit, als Zwischenmodul, beispielsweise Zwischenstecker, im Bereich eines bereits vorhandenen Steckers, beispielsweise des Hauptsteckers unter einem Lenker eines Jet-Skis, eingesetzt werden.

Ein derartiges erstes elektronisches Modul könnte temporär für die Zeit der Verwendung der schwimmenden Vorrichtung als Antrieb für ein wasserstrahlgetriebenes Sportgerät angeschlossen werden. Alternativerweise könnte das erste elektronische Modul auch darüber hinaus an der schwimmenden Vorrichtung angeschlossen bleiben. Dafür ist das erste elektronische Modul bevorzugter Weise derart ausgebildet, dass einstellbar ist, ob das von dem an der schwimmenden Vorrichtung angeordneten Gashebel und durch einen Sensor erzeugte Signal in die Motorelektronik zur Steuerung der Leistung des Wasserstrahlantriebs der schwimmenden Vorrichtung eingespeist wird oder ob dieses Signal für die Verwendung der schwimmenden Vorrichtung als Antrieb für ein wasserstrahlgetriebenes Sportgerät ersetzt wird und basierend auf den Steuerdaten der Fernbedienungsvorrichtung ein Signal erzeugt und in die Motorelektronik zur Steuerung der Leistung des Wasserstrahlantriebs der schwimmenden Vorrichtung eingespeist wird.

Somit kann in einfacher Weise zwischen normalem Betrieb und ferngesteuertem Betrieb umgeschaltet und gewechselt werden.

Des Weiteren ist bevorzugter Weise vorgesehen, dass die Stelleinheit ein zweites Stellglied zur mechanischen Betätigung eines der schwimmenden Vorrichtung zugeordneten Mittels zur Steuerung einer Startfunktion und/oder Stoppfunktion des Wasserstrahlantriebs der schwimmenden Vorrichtung aufweist. Hierzu kann eine zweite mechanische Halterung für die Halterung des zweiten Stellgliedes und/oder für die Halterung eines weiteren mit dem zweiten Stellglied verbundenen Stellmotors vorgesehen sein und mittels eines weiteren lösbaren Verbindungsmittels an der schwimmenden Vorrichtung angeordnet sein. Vorzugsweise ist dabei die zweite mechanische Halterung im Bereich des der schwimmenden Vorrichtung zugeordneten Mittels zur Steuerung einer Startfunktion und/oder Stoppfunktion des Wasserstrahlantriebs der schwimmenden Vorrichtung anordbar oder angeordnet. Beispielsweise kann die zweite mechanische Halterung am linken oder rechten Handgriff, am Lenker, an der Lenkerverkleidung, am Rumpf oder an der Außenhülle der schwimmenden Vorrichtung angeordnet sein. Das zweite Stellglied ist vorzugsweise zur mechanischen Betätigung eines Druckknopfes oder Schalters an der schwimmenden Vorrichtung ausgebildet.

Ferner weist die Stelleinheit vorzugsweise ein zweites elektronisches Modul zur Steuerung einer Startfunktion und/oder Stoppfunktion des Wasserstrahlantriebs der schwimmenden Vorrichtung auf. Hierzu kann das zweite elektronische Modul als Zwischenstecker ausgebildet sein oder mit einem Zwischenstecker verbunden sein. Vorzugsweise ist das zweite elektronische Modul zur Generierung eines Spannungssignals, beispielsweise einer 12V-Spannung, ausgebildet, wobei das generierte Spannungssignal über den Zwischenstecker in die Motorsteuerelektronik der schwimmenden Vorrichtung zum Einschalten/Ausschalten des Wasserstrahlantriebs der schwimmenden Vorrichtung eingespeist werden kann.

Somit kann nicht nur die gewünschte Leistung des Wasserstrahlantriebs der schwimmenden Vorrichtung vorgegeben und eingestellt werden, sondern auch der Wasserstrahlantrieb eingeschaltet beziehungsweise ausgeschaltet werden. Die Fernbedienungsvorrichtung weist somit eine zusätzliche, beziehungsweise zwei zusätzliche, Funktionen auf.

Des Weiteren ist bevorzugter Weise vorgesehen, dass die Stelleinheit ein drittes Stellglied zur mechanischen Betätigung eines der schwimmenden Vorrichtung zugeordneten Mittels zur Steuerung einer Notausfunktion des Wasserstrahlantriebs der schwimmenden Vorrichtung aufweist. Hierzu kann beispielsweise ein im stromlosen Zustand eingefahrener Zugmotor verwendet werden, der das Sicherungselement, beispielsweise eine Kunststoffkappe oder ein Plättchen, vom Notausschalter der schwimmenden Vorrichtung, beispielsweise des Jet-Skis, abzieht. Somit können für die Notausfunktion beispielsweise ein zusätzlicher Stellmotor und ein mit diesem Stellmotor verbundenes drittes Stellglied vorgesehen sein. Für die Halterung des dritten Stellgliedes und/oder für die Halterung eines weiteren mit dem dritten Stellglied verbundenen Stellmotors kann eine dritte mechanische Halterung vorgesehen sein, welche mittels eines weiteren lösbaren Verbindungsmittels an der schwimmenden Vorrichtung angeordnet sein. Vorzugsweise ist dabei die dritte mechanische Halterung im Bereich des der schwimmenden Vorrichtung zugeordneten Mittels zur Steuerung einer Notausfunktion des Wasserstrahlantriebs der schwimmenden Vorrichtung anordbar oder angeordnet. Beispielsweise kann die dritte mechanische Halterung am linken oder rechten Handgriff, am Lenker, an der Lenkerverkleidung, am Rumpf oder an der Außenhülle der schwimmenden Vorrichtung angeordnet sein.

Ferner weist die Stelleinheit vorzugsweise ein drittes elektronisches Modul zur Steuerung einer Notausfunktion des Wasserstrahlantriebs der schwimmenden Vorrichtung auf. Hierzu kann das dritte elektronische Modul als Zwischenstecker ausgebildet sein oder mit einem Zwischenstecker verbunden sein. Vorzugsweise ist das dritte elektronische Modul zur Unterbrechung einer elektrischen Leitung zum der schwimmenden Vorrichtung zugeordneten Notausschalter ausgebildet.

Somit kann zusätzlich zur Steuerung der Leistung, zur Steuerung der Startfunktion und zur Steuerung der Stoppfunktion des Wasserstrahlantriebs der schwimmenden Vorrichtung der Wasserstrahlantrieb der schwimmenden Funktion durch Betätigung eines Notausschalters an der ersten Bedieneinheit ferngesteuert ausgeschaltet werden.

Des Weiteren ist bevorzugt, dass die Stelleinheit ein viertes Stellglied zur mechanischen Betätigung eines der schwimmenden Vorrichtung zugeordneten Mittels zur Auswahl eines Modus des Wasserstrahlantriebs der schwimmenden Vorrichtung aufweist. Beispielsweise kann hierüber ein Fahrmodus der schwimmenden Vorrichtung ausgewählt und eingestellt werden. Hierzu kann eine vierte mechanische Halterung für die Halterung des vierten Stellgliedes und/oder für die Halterung eines weiteren mit dem vierten Stellglied verbundenen Stellmotors vorgesehen sein und mittels eines weiteren lösbaren Verbindungsmittels an der schwimmenden Vorrichtung angeordnet sein. Vorzugsweise ist dabei die vierte mechanische Halterung im Bereich des der schwimmenden Vorrichtung zugeordneten Mittels zur Auswahl eines Modus des Wasserstrahlantriebs der schwimmenden Vorrichtung anordbar oder angeordnet. Beispielsweise kann die vierte mechanische Halterung am linken oder rechten Handgriff, am Lenker, an der Lenkerverkleidung, am Rumpf oder an der Außenhülle der schwimmenden Vorrichtung angeordnet sein. Das vierte Stellglied ist vorzugsweise zur mechanischen Betätigung eines Druckknopfes oder Schalters an der schwimmenden Vorrichtung ausgebildet.

Zur Auswahl eines Modus des Wasserstrahlantriebs der schwimmenden Vorrichtung kann die Stelleinheit vorzugsweise ein viertes elektronisches Modul aufweisen. Hierzu kann das vierte elektronische Modul als Zwischenstecker ausgebildet sein oder mit einem Zwischenstecker verbunden sein. Vorzugsweise ist das vierte elektronische Modul zur Variierung einer Spannung an einer der schwimmenden Vorrichtung zugeordneten Sensorleitung ausgebildet.

Die elektronischen Module können als einzelne Module ausgebildet sein oder vorzugsweise zumindest teilweise, oder besonders bevorzugter Weise vollständig, in einem elektronischen Modul zusammengefasst sein. Beispielsweise könnten das erste elektronische Modul, das zweite elektronische Modul, das dritte elektronische Modul und/oder das vierte elektronische Modul in einem einzigen elektronischen Gesamtmodul ausgebildet sein. Ferner könnten das erste elektronische Modul, das zweite elektronische Modul, das dritte elektronische Modul und/oder das vierte elektronische Modul in einem einzigen Zwischenstecker angeordnet sein oder mit einem einzigen Zwischenstecker verbunden sein. Ferner könnten das erste elektronische Modul, das zweite elektronische Modul, das dritte elektronische Modul und/oder das vierte elektronische Modul unterschiedlichen Zwischensteckern zugeordnet sein. Unter Zwischenstecker ist im Sinne der Erfindung ein Stecker zu verstehen, welcher an einer vorgegebenen Position eines oder mehrerer der schwimmenden Vorrichtung zugeordneter Kabel elektrisch angeschlossen werden kann. Eine derartige vorgegebene Position kann eine bestehende Steckerverbindung sein, welche getrennt wird und der Zwischenstecker dazwischen gesteckt wird. Der Zwischenstecker verbindet die beiden aufgetrennten Enden des bestehenden Kabels an der vorgegebenen Position, wobei die Signale/Spannungen durch das oder die elektronischen Module teilweise verändert oder ersetzt werden.

Bevorzugter Weise werden sämtliche Stellglieder und/oder Stellmotoren von der Elektronik zur Verarbeitung der vom Empfänger empfangenen Steuerdaten angesteuert. Ferner ist vorzugsweise vorgesehen, dass sämtliche elektronischen Module von der Elektronik zur Verarbeitung der vom Empfänger empfangenen Steuerdaten angesteuert werden.

Des Weiteren ist bevorzugter Weise vorgesehen, dass die Fernbedienungsvorrichtung eine zweite Bedieneinheit, insbesondere in Form einer Trainerfernbedienung oder eines Trainermoduls, aufweist. Die zweite Bedieneinheit weist dabei, wie die erste Bedieneinheit, einen Sender zur Weiterleitung der Steuerdaten an die Stelleinheit auf.

Durch das Vorsehen einer zweiten Bedieneinheit in Form einer Trainerfernbedienung oder eines Trainermoduls kann ein Lehrer oder Trainer das wasserstrahlgetriebene Sportgerät mit einem Schüler vollständig oder teilweise steuern. Bevorzugter Weise weist die zweite Bedieneinheit zumindest dieselben Funktionen wie die erste Bedieneinheit auf. Somit kann über die zweite Bedieneinheit zumindest ebenfalls die Leistung des Wasserstrahlantriebs der schwimmenden Vorrichtung, die Startfunktion und/oder Stoppfunktion des Wasserstrahlantriebs der schwimmenden Vorrichtung, die Notausfunktion des Wasserstrahlantriebs der schwimmenden Vorrichtung sowie die Auswahl eines Modus des Wasserstrahlantriebs der schwimmenden Vorrichtung gesteuert beziehungsweise ausgewählt werden.

Des Weiteren ist bevorzugter Weise vorgesehen, dass über die zweite Bedieneinheit die Funktionen der ersten Bedieneinheit aktiviert und/oder deaktiviert werden können. Somit weist die zweite Bedieneinheit eine höhere Priorität gegenüber der ersten Bedieneinheit auf. Hierdurch ist es möglich, dass die zweite Bedieneinheit die volle Kontrolle behält und sämtliche Funktionen steuert oder eine teilweise sowie auch vollständige Kontrolle an die erste Bedieneinheit abgibt, beziehungsweise an der ersten Bedieneinheit freischaltet.

Des Weiteren ist bevorzugter Weise vorgesehen, dass die zweite Bedieneinheit zusätzliche Funktionen wie zum Beispiel die Begrenzung der maximalen Leistung des Wasserstrahlantriebs der schwimmenden Vorrichtung und/oder die Begrenzung der maximalen Beschleunigung und/oder Verzögerung des Wasserstrahlantriebs der schwimmenden Vorrichtung aufweist.

Die Aktivierung und/oder Deaktivierung der Funktionen der ersten Bedieneinheit kann bevorzugter Weise über eine Funkverbindung zwischen der ersten Bedieneinheit und der zweiten Bedieneinheit vorgenommen werden. Somit weist zumindest die erste Bedieneinheit zusätzlich zum Sender auch einen Empfänger auf. Alternativerweise oder zusätzlich kann die Aktivierung und/oder Deaktivierung der Funktionen der ersten Bedieneinheit über die Stelleinheit vorgenommen werden. In diesem Fall werden der Stelleinheit, beziehungsweise der Elektronik der Stelleinheit, Aktivierungs- und/oder Deaktivierungsdaten von der zweiten Bedieneinheit übermittelt.

Das Vorsehen einer zweiten Bedieneinheit mit zusätzlichen Funktionen und der Möglichkeit einzelne Funktionen an der ersten Bedieneinheit freizugeben beziehungsweise zu blockieren macht die Handhabung insbesondere beim Training und bei der Einweisung in dem Betrieb eines wasserstrahlgetriebenen Sportgerätes erheblich einfacher. Somit müssen derartige Funktionen nicht an der schwimmenden Vorrichtung vorgenommen werden. Außerdem ermöglicht das Vorsehen einer derartigen zweiten Bedieneinheit einen sicheren Betrieb, da insbesondere maximale Beschleunigungen und Verzögerungen sowie auch die maximale Leistung vorgegeben werden können und an die Fähigkeiten des Schülers angepasst werden können.

Dabei ist bevorzugter Weise vorgesehen, dass die zweite Bedieneinheit mittels eines Senders über eine kabelgebundene Verbindung oder eine Funkverbindung mit der Stelleinheit verbunden ist. Somit kann die schwimmende Vorrichtung, beziehungsweise deren Wasserstrahlantrieb und insbesondere dessen Leistung mittels der zweiten Bedieneinheit in Form einer Trainerfernbedienung über eine Funkverbindung zur Stelleinheit ferngesteuert werden. Zusätzlich oder alternativerweise kann die zweite Bedieneinheit in Form eines Trainiermoduls kabelgebunden mit der Stelleinheit verbunden sein und an der schwimmenden Vorrichtung angeordnet sein. Ein derartiges Trainermodul kann wiederum ferngesteuert werden oder es können die Funktionen vorab am Trainermodul eingestellt werden.

Des Weiteren ist bevorzugter Weise vorgesehen, dass die erste Bedieneinheit und/oder die zweite Bedieneinheit nicht nur Eingabemittel zur Einstellung der Leistung des Wasserstrahlantriebs der schwimmenden Vorrichtung und/oder zur Einstellung der Startfunktion und/oder Stoppfunktion und/oder Notausfunktion und/oder zur Auswahl des Modus des Wasserstrahlantriebs der schwimmenden Vorrichtung aufweisen, sondern auch ein Anzeigemittel, beispielsweise einen Monitor, aufweisen, über welchen die eingestellten Funktionen sowie weitere Fahrzeugdaten wie Geschwindigkeit, Motordrehzahl oder weitere Informationen angezeigt werden können.

### Kurze Beschreibung der Zeichnungen

Die Erfindung wird nun mit Bezug auf die begleitenden Zeichnungen anhand besonders bevorzugter Ausführungsformen beispielhaft erläutert.

Es zeigen:
Fig. 1 eine schematische Ansicht eines wasserstrahlgetriebenen Sportgerätes, welches über einen Schlauch an einer schwimmenden Vorrichtung, nämlich einen Jet-Ski, angeschlossen ist, mit einer Fernbedienungsvorrichtung,
Fig. 2 ein Schaubild eines Aufbaus der einzelnen Funktionen einer Fernbedienungsvorrichtung,
Fig. 3 eine schematische Ansicht einer Bedieneinheit für eine Fernbedienungsvorrichtung,
Fig. 4 eine schematische Ansicht einer Stelleinheit mit mechanischer Halterung einer Fernbedienungsvorrichtung,
Fig. 5 eine schematische Ansicht einer mechanischen Halterung einer Stelleinheit einer Fernbedienungsvorrichtung, und
Fig. 6 eine schematische Ansicht eines dritten Trägerprofils einer mechanischen Halterung der Stelleinheit.

### Bevorzugte Ausführungsformen der Erfindung

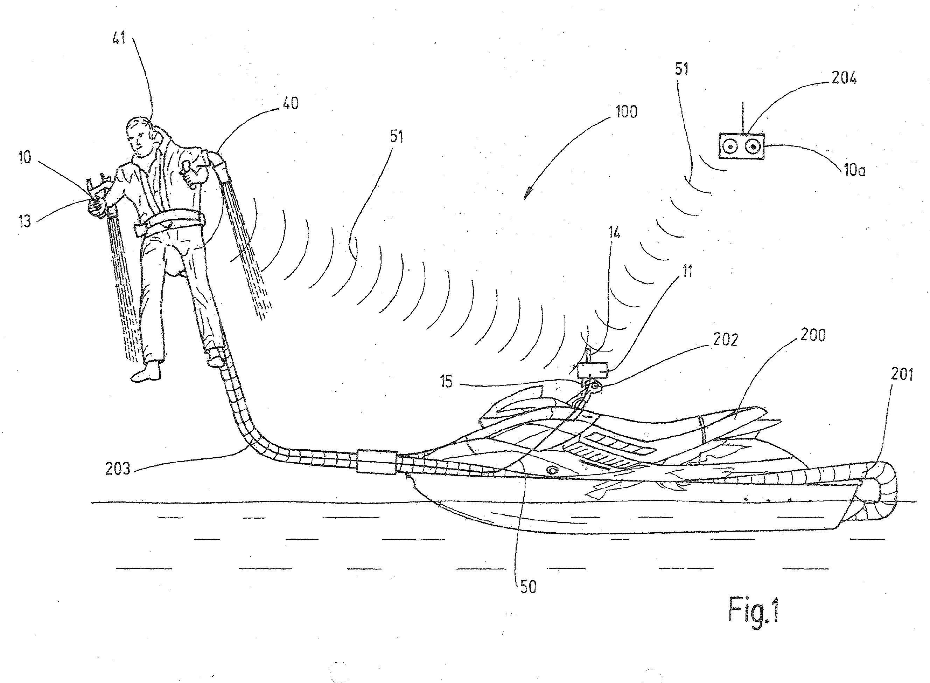

Fig. 1 zeigt eine Fernbedienungsvorrichtung 100 zur Fernsteuerung einer schwimmenden Vorrichtung 200, nämlich eines Jet-Skis, mit einem Wasserstrahlantrieb. Dabei umfasst die Fernbedienungsvorrichtung 100 im Wesentlichen zwei Einheiten, eine erste Bedieneinheit 10 und eine Stelleinheit 11. Die erste Bedieneinheit 10 ist an einem wasserstrahlgetriebenen Sportgerät 40 angeordnet und dient zur Aufnahme von Steuerdaten durch eine Person 41. Die Stelleinheit 11 ist an der schwimmenden Vorrichtung 200, nämlich am Handgriff 202 der schwimmenden Vorrichtung 200 angeordnet. Die Stelleinheit 11 dient zur Steuerung und Einstellung einer Leistung des Wasserstrahlantriebs der schwimmenden Vorrichtung 200.

Das wasserstrahlgetriebene Sportgerät ist mittels eines langen, ca. 10 m langen, Schlauches 203 über eine Wasserstrahlumlenkvorrichtung 201 mit der Austrittsdüse der schwimmenden Vorrichtung 200 verbunden. Die schwimmende Vorrichtung zieht Wasser von unten an und befördert dieses in Form eines Wasserstrahls nach hinten durch die Austrittsdüse über die Wasserstrahlumlenkvorrichtung 201 durch den Schlauch 203 zum wasserstrahlgetriebenen Sportgerät 40. Am wasserstrahlgetriebenen Sportgerät 40 wird der Wasserstrahl in zwei Teilen nach unten ausgestoßen. Dadurch kann die Person 41 mit dem wasserstrahlgetriebenen Sportgerät 40 von der Wasseroberfläche abheben. Die Leistung des Wasserstrahls und somit die Geschwindigkeit und Beschleunigung, die die Person 41 mit dem wasserstrahlgetriebenen Sportgerät 40 erreichen kann hängt im Wesentlichen von der Leistung des Wasserstrahlantriebs der schwimmenden Vorrichtung 200 ab. Die Leistung des Wasserstrahlantriebs der schwimmenden Vorrichtung 200 wird üblicherweise an der schwimmenden Vorrichtung, nämlich einem Jet-Ski, mittels eines Gashebels 206 am Handgriff 202 gesteuert und vorgegeben.

Am Handgriff 202 der schwimmenden Vorrichtung 200 ist mittels eines ersten lösbaren Verbindungsmittels 17, nämlich mittels Schellen, die Stelleinheit 11 der Fernbedienungsvorrichtung 100 angebracht. Die Stelleinheit 11 weist ferner einen Stellmotor 20 und ein mit dem Stellmotor 20 verbundenes erstes Stellglied 15 auf. Das erste Stellglied 15 ist als starr ausgebildeter Finger in Form einer kleineren Stange ausgebildet und dient dazu, den Gashebel 206 zu betätigen. Durch den Stellmotor 20 wird der Hub, beziehungsweise die Betätigungsstrecke für den Gashebel 206 und somit die gewünschte Leistung des Wasserstrahlantriebs der schwimmenden Vorrichtung 200 vorgegeben.

An der Stelleinheit 11 ist ein Empfänger 14 angeordnet. Dieser Empfänger 14 empfängt die Steuerdaten von einem Sender 13, welcher an der ersten Bedieneinheit 10 angeordnet ist. An der ersten Bedieneinheit 10 ist ein drehbarer Gasgriff 60 angeordnet. Mittels des drehbaren Gasgriffs 60 kann die Person 41 die gewünschte Leistungsstärke des Wasserstrahlantriebs für die schwimmende Vorrichtung 200 vorgeben. Diese Steuerdaten werden von der ersten Bedieneinheit 10 aufgenommen und über den Sender 13 als Steuerdaten versandt. Basierend auf den vom Empfänger 14 empfangenen Steuerdaten wird die Leistung des Wasserstrahlantriebs der schwimmenden Vorrichtung 200 durch die Stelleinheit 11 an der schwimmenden Vorrichtung 200 gesteuert. Die Verbindung zwischen Sender 13 und Empfänger 14 kann als Funkverbindung 51 oder als kabelgebundene Verbindung 50, beispielsweise als BUS-System, ausgebildet sein.

Ferner ist in Fig. 1 eine zweite Bedieneinheit 10a in Form einer Trainerfernbedienung 204 gezeigt. Die zweite Bedieneinheit 10a ist über eine Funkverbindung 51 mit der Stelleinheit 11 verbunden. Wie über die erste Bedieneinheit 10 kann über die zweite Bedieneinheit 10a die Leistung des Wasserstrahlantriebes der schwimmenden Vorrichtung 200 ferngesteuert werden. Zusätzlich können weitere Funktionen ferngesteuert werden. Die zweite Bedieneinheit 10a weist gegenüber der ersten Bedieneinheit 10 eine höhere Priorität auf.

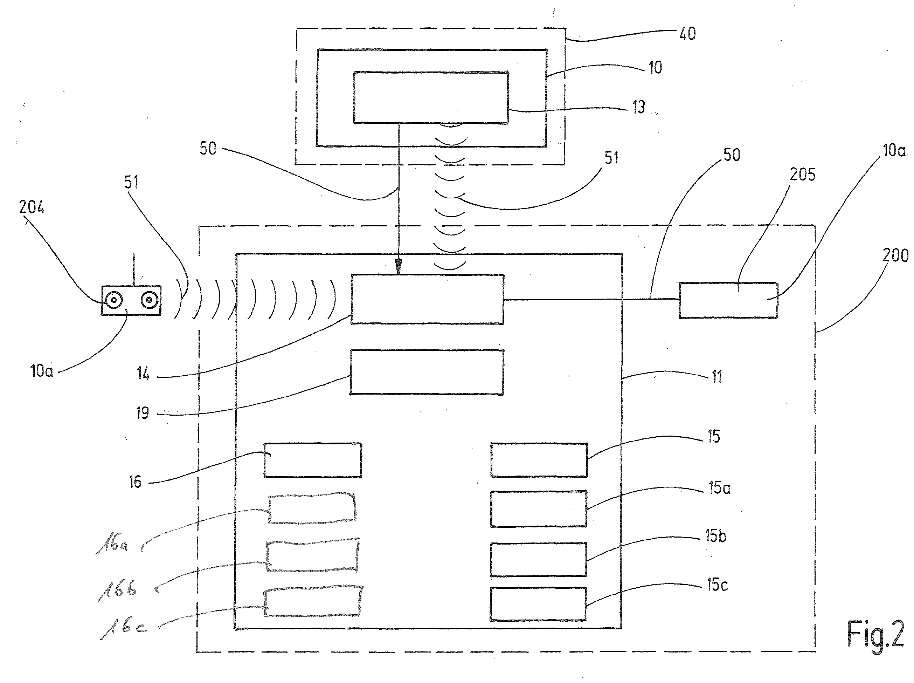

Fig. 2 zeigt ein Diagramm mit den Modulen der Fernbedienungsvorrichtung 100. Am wasserstrahlgetriebenen Sportgerät 40 ist die erste Bedieneinheit 10 mit dem Sender 13 angeordnet. Mittels dieses Senders 13 werden die von der ersten Bedieneinheit 10 aufgenommenen Steuerdaten über eine kabelgebundene Verbindung 50 oder eine Funkverbindung 51 an den Empfänger 14 in der Stelleinheit 11, welche an der schwimmenden Vorrichtung 200 angeordnet ist, versandt. Die Steuerdaten werden in der Stelleinheit 11 von der Elektronik 19 verarbeitet. Basierend auf diesen Daten wird mittels eines Stellmotors 20 das erste Stellglied 15 zur mechanischen Betätigung des Gashebels 206 der schwimmenden Vorrichtung 200 angesteuert. Alternativerweise zur mechanischen Betätigung des Gashebels 206 mittels des ersten Stellglieds 15 kann die gewünschte Leistung des Wasserstrahlantriebs der schwimmenden Vorrichtung 200 über das erste elektronische Modul 16 eingestellt werden und hierfür ein Signal in die Motorelektronik zur Steuerung der Leistung des Wasserstrahlantriebs der schwimmenden Vorrichtung eingespeist werden.

Zusätzlich zur Steuerung der Leistung des Wasserstrahlantriebs der schwimmenden Vorrichtung 200 kann über die Fernbedienungsvorrichtung 100 beispielsweise eine Startfunktion, Stoppfunktion, Notausfunktion und der Fahrmodus der schwimmenden Vorrichtung 200 betätigt und ausgewählt werden. Die Steuerung dieser zusätzlichen Funktionen kann entweder über weitere elektronische Module 16, 16a, 16b, 16c vorgenommen werden oder über ein zweites Stellglied 15a, ein drittes Stellglied 15b und ein viertes Stellglied 15c durch mechanische Betätigung entsprechender Hebel und Schalter oder Knöpfe an der schwimmenden Vorrichtung 200 vorgenommen werden.

Zusätzlich zur ersten Bedieneinheit 10 ist eine zweite Bedieneinheit 10a in Form einer Trainerfernbedienung 204 oder eines Trainermoduls 205 vorgesehen. Es können auch sowohl eine Trainerfernbedienung 204 sowie gleichzeitig ein Trainermodul 205 vorgesehen sein. Mittels dieser zweiten Bedieneinheit 10a, nämlich der Trainerfernbedienung 204 und des Trainermoduls 205, können Steuerdaten zur Steuerung der Leistung des Wasserstrahlantriebs der schwimmenden Vorrichtung 200 sowie zur Ansteuerung weiterer Funktionen an die Stelleinheit 11 gesendet werden. Die Daten können beispielsweise von einer Trainerfernbedienung 204 über eine Funkverbindung 51 an die Stelleinheit 11 gesendet werden. Ferner könnte ein Trainermodul 205 mittels einer kabelgebundenen Verbindung 51 mit der Stelleinheit 11, beziehungsweise dem Empfänger 14 der Stelleinheit 11, verbunden sein. Ein derartiges Trainermodul 205 kann somit an der schwimmenden Vorrichtung 200 angeordnet sein.

Mittels einer derartigen zweiten Bedieneinheit 10a kann die Leistung des Wasserstrahlantriebs der schwimmenden Vorrichtung 200 sowie auch die zusätzlichen Funktionen vollständig gesteuert werden. Ferner können einzelne Funktionen für die die erste Bedieneinheit 10 freigeschaltet werden. Somit kann während der Einweisung oder eines Trainingsbetriebs wahlweise entschieden werden, welche Funktionen durch die Person 41 vom wasserstrahlgetriebenen Sportgerät 40 über die erste Bedieneinheit 10 selbständig gesteuert werden können und welche Funktionen lediglich über die zweite Bedieneinheit 10a von einer anderen Person, beispielsweise einem Trainer gesteuert werden können. Zusätzlich können über die zweite Bedieneinheit 10a Vorgaben wie zum Beispiel die Begrenzung der maximalen Leistung des Wasserstrahlantriebs der schwimmenden Vorrichtung 200 sowie der maximalen Beschleunigung oder Verzögerung des Wasserstrahlantriebs vorgegeben werden. Hierdurch wird zum einen die Flexibilität erheblich erhöht, da diese Vorgaben nicht an der Hauptelektronik der schwimmenden Vorrichtung 200 vorgenommen werden müssen, sondern in einfacher Weise von der zweiten Bedieneinheit 10a, beispielsweise der Trainerfernbedienung 204 oder dem Trainermodul 205 vorgegeben und in einfacher Weise verändert werden können. Des Weiteren kann hierdurch die Sicherheit erheblich erhöht werden.

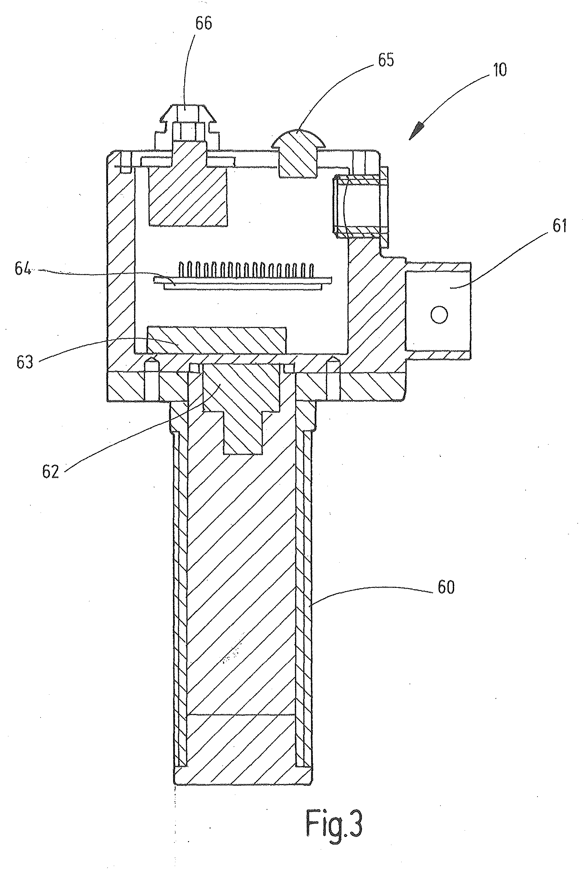

Fig. 3 zeigt die erste Bedieneinheit 10, welche üblicherweise am wasserstrahlgetriebenen Sportgerät 40 angeordnet ist und von einer Person 41 bedient wird. Die erste Bedieneinheit 10 weist dabei einen drehbaren Gasgriff 60 zur Einstellung der gewünschten Leistung des Wasserstrahlantriebs der schwimmenden Vorrichtung 200 auf. Die am drehbaren Gasgriff 60 vorgenommene Einstellung wird durch den Magneten 62 und den Hallsensor 63 erkannt, in ein Spannungssignal umgewandelt und an einen Mikrocontroller 64 weitergeleitet. Der Mikrocontroller 64 dient der Verarbeitung der Daten sowie auch der Steuerung der jeweiligen Ein- und Ausgänge. Die erste Bedieneinheit 10 weist eine Aufnahmevorrichtung 61 für das wasserstrahlgetriebene Sportgerät 40 auf und kann hierüber mit diesem verbunden werden. Des Weiteren sind an der ersten Bedieneinheit 10 Knöpfe zur Steuerung der weiteren Funktionen, nämlich ein Start-/Stopp-Knopf 65 und ein Notausknopf 66 angeordnet.

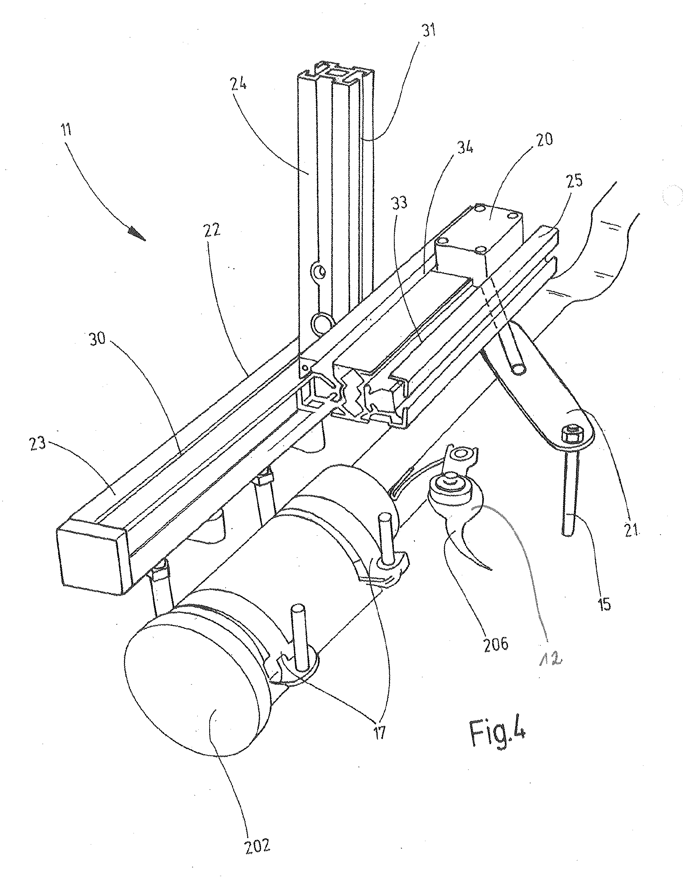

In Fig. 4 ist die Stelleinheit 11 gezeigt. Die Stelleinheit 11 ist mittels eines ersten lösbaren Verbindungsmittels 17, nämlich mittels Schellen, am Handgriff 202 der schwimmenden Vorrichtung 200 angeordnet. Die Stelleinheit 11 weist eine erste mechanische Halterung 22 zur Halterung des Stellmotors 20 auf. Mit dem Stellmotor 20 ist ein erstes Stellglied 15, in Form eines starren Fingers, verbunden. Hierüber kann auf den Gashebel 206 eine Druckkraft ausgeübt werden und somit die Leistung des Wasserstrahlantriebs der schwimmenden Vorrichtung 200 gesteuert werden.

Die erste mechanische Halterung 22 besteht aus einem ersten Trägerprofil 23, einem zweiten Trägerprofil 24 und einem dritten Trägerprofil 25. An dem ersten Trägerprofil 23 ist das erste lösbare Verbindungsmittel 17, nämlich die Schellen, zur Verbindung der ersten mechanischen Halterung 22 mit der schwimmenden Vorrichtung 200 angeordnet. Bei Anordnung der ersten mechanischen Halterung 22 am Handgriff 202 der schwimmenden Vorrichtung 200 ist das erste Trägerprofil 23 im Wesentlichen parallel zum Handgriff 202 der schwimmenden Vorrichtung 200 angeordnet. Mittels des ersten lösbaren Verbindungsmittels 17 kann die erste mechanische Halterung 22 bei Bedarf um den Handgriff 202 herumgedreht und verstellt werden. Im Wesentlichen senkrecht zum ersten Trägerprofil 23 ist das zweite Trägerprofil 24 angeordnet. Dabei ist das zweite Trägerprofil 24 mit einer Stirnseite auf einer Längsseite des ersten Trägerprofils aufgesetzt und mittels eines ersten Trägerprofilverbindungsmittels 26 mit dem ersten Trägerprofil 23 verbunden. An der Längsseite weist das erste Trägerprofil 23 eine erste Nut 30 auf. Das erste Trägerverbindungsmittel 26 wird mit einem Stift in die Stirnseite des zweiten Trägerprofils 24 und mit dem scheibenförmigen Kopf in die erste Nut 30 eingesetzt. Somit ist das zweite Trägerprofil 24 in Längsrichtung des ersten Trägerprofils 23 entlang der ersten Nut 30 verschiebbar. Mittels einer Arretierung kann das zweite Trägerprofil 24 festgestellt werden. Ferner ist das erste Trägerprofilverbindungsmittel 26 derart ausgebildet, dass das zweite Trägerprofil 24 um seine Längsachse 35 drehbar angeordnet ist. Auch diese Stellung kann mittels einer Arretierung festgestellt werden.

Das dritte Trägerprofil 25 dient als Träger für den Stellmotor 20. Das zweite Trägerprofil 24 weist an einer Längsseite eine zweite Nut 31 auf. Das dritte Trägerprofil 25 weist ebenfalls an einer Längsseite eine Nut, nämlich eine dritte Nut 32, auf. Mittels eines zweiten Trägerprofilverbindungsmittels 27 ist das zweite Trägerprofil 24 mit dem dritten Trägerprofil 25 im Bereich der zweiten Nut 31 und dritten Nut 32 verbunden. Dabei ist das zweite Trägerprofil 24 und das dritte Trägerprofil 25 mittels des zweiten Trägerprofilverbindungsmittels 27 in Längsrichtung des zweiten Trägerprofils 24 entlang der zweiten Nut 31 verschiebbar verbunden. Des Weiteren ist das dritte Trägerprofil 25 um seine Querachse 36 drehbar mit dem zweiten Trägerprofil 24 verbunden.

Durch die Verschiebbarkeit der einzelnen Trägerprofile 23, 24, 25 und die Ausgestaltung des ersten Trägerprofilverbindungsmittels 26 und zweiten Trägerprofilverbindungsmittels 27 als drehbare Verbindungsmittel sowie durch das Vorsehen des ersten lösbaren Verbindungsmittels 17, kann die erste mechanische Halterung 22 an jeden gängigen Jet-Ski, beziehungsweise jede gängige schwimmende Vorrichtung 200 mit Wasserstrahlantrieb und deren unterschiedliche Abmessungen angepasst werden. Beispielsweise kann die erste mechanische Halterung 22 in Abhängigkeit davon, ob der Gashebel 206 als Fingergas oder Daumengas vorgesehen ist, entsprechend angeordnet werden. Des Weiteren kann die Neigung des ersten Stellglieds 15 entsprechend der Anordnung und Abmessungen des Handgriffs 202 an der schwimmenden Vorrichtung 200 angepasst und eingestellt werden. Auch die Abstände zwischen Handgriff 202 und Gashebel 206 können berücksichtigt und eingestellt werden. Somit kann die Stelleinheit 11 mittels der ersten mechanischen Halterung 22 an jede schwimmende Vorrichtung 200 mit Wasserstrahlantrieb, insbesondere jeden Jet-Ski oder jedes Jet-Boot, aufgesetzt und angeschlossen werden, ohne dass Umbaumaßnahmen an der schwimmenden Vorrichtung 200 notwendig sind.

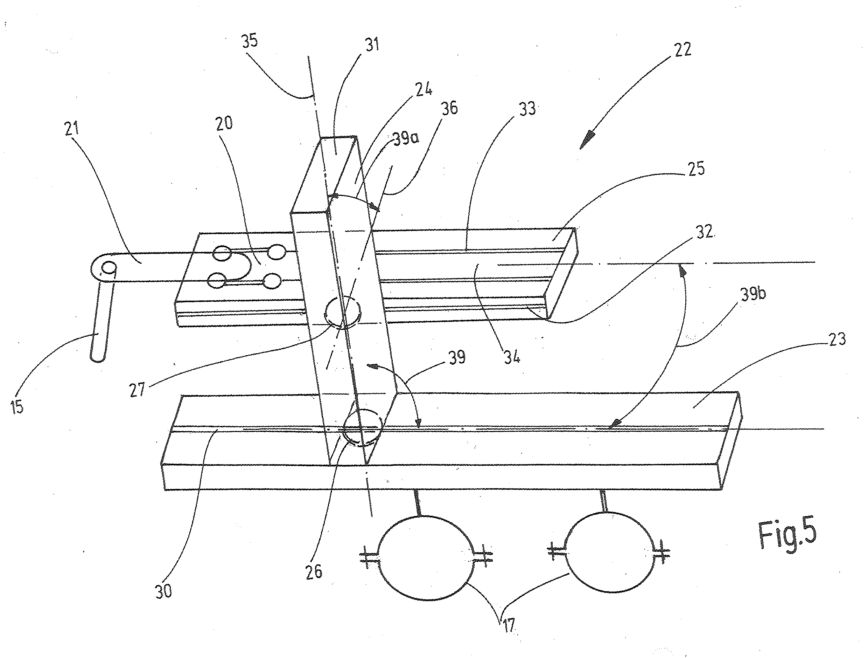

Fig. 5 zeigt nochmals die erste mechanische Halterung 22 bestehend aus erstem Trägerprofil 23, einem zweitem Trägerprofil 24 und einem drittem Trägerprofil 25 sowie die Ausgestaltung der drei Trägerprofile 23, 24, 25. Insbesondere ist in Fig. 5 die verschiebbare Anordnung der einzelnen Trägerprofile 23, 24 und 25 gezeigt. Ferner sind das erste Trägerprofilverbindungsmittel 26 und das zweite Trägerprofilverbindungsmittel 27 sowie die Längsachse 35 des zweiten Trägerprofils 24 und die Querachse 36 des dritten Trägerprofils 25 gezeigt. Die beiden Trägerprofilverbindungsmittel 26, 27 sind als stiftförmige Verbinder mit einem kreisrunden Durchmesser und scheibenförmigem Kopf ausgebildet. Der stiftförmige Verbinder ist jeweils in das Profil eingebracht und sein scheibenförmiger Kopf in die jeweilige Nut 30, 32 des zu verbindenden Trägerprofils 23, 25 einsetzbar.

An einer Längsseite des dritten Trägerprofils 25 sind zwei parallel zueinander angeordnete Nuten, nämlich eine vierte Nut 33 und eine fünfte Nut 34, angeordnet. Zwischen diesen Nuten 34, 35 ist der Stellmotor 20 angeordnet und mit dem dritten Trägerprofil 25 verbunden. Das erste Stellglied 15 ist über einen Arm 21 mit dem Stellmotor 20 verbunden.

Der Winkel 39 zwischen dem ersten Trägerprofil 23 und dem zweiten Trägerprofil 24 beträgt im Wesentlichen 90°. Der Winkel 39a zwischen dem zweiten Trägerprofil 24 und dem dritten Trägerprofil 25 zwischen 0° und 180° variierbar. Der Winkel 39b zwischen dem ersten Trägerprofil 23 und dem dritten Trägerprofil 25 ist ebenfalls zwischen 0° und 180° variierbar.

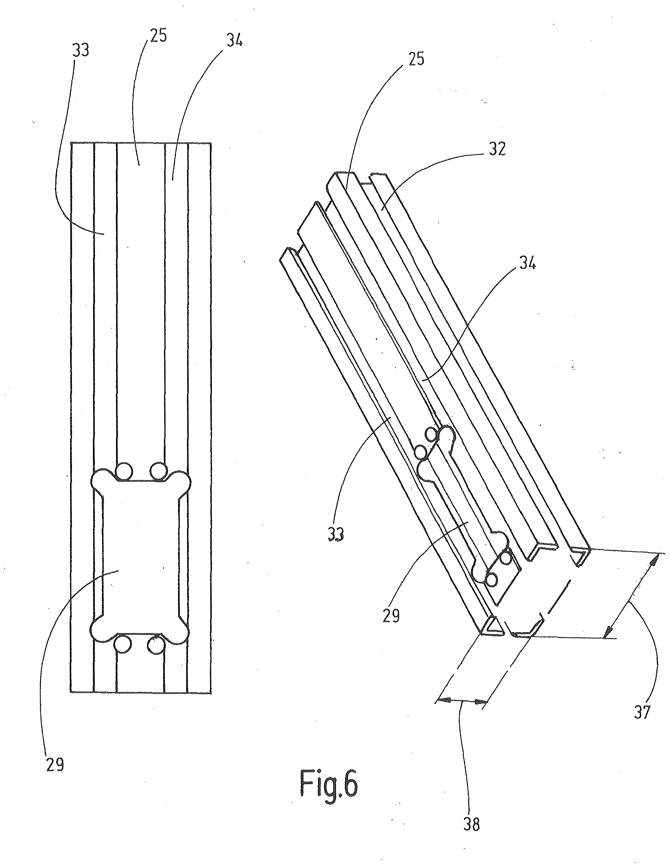

Fig. 6 zeigt eine perspektivische Ansicht des dritten Trägerprofils 25 sowie eine Draufsicht auf das dritte Trägerprofil 25. Das dritte Trägerprofil 25 weist eine Breite 37 von 40 mm und eine Höhe 38 von 20 mm auf. Entlang der schmaleren Längsseite des dritten Trägerprofils 25 ist die dritte Nut 32 zur Verbindung mit dem zweiten Trägerprofil 24 mittels des zweiten Trägerprofilverbindungsmittels 27 angeordnet. An einer breiteren Längsseite sind die vierte Nut 33 und die fünfte Nut 34 im Wesentlichen parallel zueinander angeordnet. Ferner ist in einem Seitenbereich an der breiteren Längsseite des dritten Trägerprofils 25 eine Durchbrechung 29 zur Aufnahme des Stellmotors 20 vorgesehen.

### Bezugszeichenliste

100 Fernbedienungsvorrichtung
200 schwimmende Vorrichtung mit einem Wasserstrahlantrieb
201 Wasserstrahlumlenkvorrichtung
202 Handgriff
203 Schlauch
204 Trainerfernbedienung
205 Trainermodul
206 Gashebel
10 erste Bedieneinheit
10a zweite Bedieneinheit
11 Stelleinheit
12 Mittel zur Steuerung der Leistung des Wasserstrahlantriebes der schwimmenden Vorrichtung
12a Mittel zur Steuerung einer Startfunktion und/oder Stoppfunktion des Wasserstrahlantriebes der schwimmenden Vorrichtung
12b Mittel zur Steuerung einer Notausfunktion des Wasserstrahlantriebes der schwimmenden Vorrichtung
12c Mittel zur Auswahl eines Modus des Wasserstrahlantriebes der schwimmenden Vorrichtung
13 Sender
14 Empfänger
15 erstes Stellglied
15a zweites Stellglied
15b drittes Stellglied
15c viertes Stellglied
16 erstes elektronisches Modul
16a zweites elektronisches Modul
16b drittes elektronisches Modul
16c viertes elektronisches Modul
17 erstes lösbares Verbindungsmittel
18 zweites lösbares Verbindungsmittel
19 Elektronik
20 Stellmotor
21 Arm
22 erste mechanische Halterung
22a zweite mechanische Halterung
22b dritte mechanische Halterung
22c vierte mechanische Halterung
23 erstes Trägerprofil
24 zweites Trägerprofil
25 drittes Trägerprofil
26 erstes Trägerprofilverbindungsmittel
27 zweites Trägerprofilverbindungsmittel
29 Durchbrechung
30 erste Nut
31 zweite Nut
32 dritte Nut
33 vierte Nut
34 fünfte Nut
35 Längsachse des zweiten Trägerprofils
36 Querachse des dritten Trägerprofils
37 Breite des dritten Trägerprofils
38 Höhe des dritten Trägerprofils
39 Winkel zwischen erstem Trägerprofil und zweitem Trägerprofil
39a Winkel zwischen zweitem Trägerprofil und drittem Trägerprofil
39b Winkel zwischen erstem Trägerprofil und drittem Trägerprofil
40 wasserstrahlgetriebenes Sportgerät
41 Person
50 kabelgebundene Verbindung
51 Funkverbindung
60 drehbarer Gasgriff
61 Aufnahme für wasserstrahlgetriebenes Sportgerät
62 Magnet
63 Hallsensor
64 Mikrocontroller
65 Start/Stopp Knopf
66 Notaus Knopf

## Patentansprüche

1. Fernbedienungsvorrichtung (100) zur Fernbedienung einer schwimmenden Vorrichtung (200) mit einem Wasserstrahlantrieb zur Erzeugung eines Wasserstrahls, wobei die Fernbedienungsvorrichtung (100) eine erste Bedieneinheit (10) zur Aufnahme von Steuerdaten sowie eine Stelleinheit (11) zur Steuerung und/oder Einstellung einer Leistung des Wasserstrahlantriebes der schwimmenden Vorrichtung (200) aufweist, wobei die erste Bedieneinheit (10) einen Sender (13) zum Weiterleiten der Steuerdaten aufweist, wobei die Stelleinheit (11) einen Empfänger (14) zum Empfang der vom Sender (13) weitergeleiteten Steuerdaten aufweist, **dadurch gekennzeichnet, dass** die Stelleinheit (11) ein erstes Stellglied (15) zur mechanischen Betätigung eines der schwimmenden Vorrichtung (200) zugeordneten Mittels (12) zur Steuerung der Leistung des Wasserstrahlantriebes der schwimmenden Vorrichtung (200) aufweist, wobei das der schwimmenden Vorrichtung (200) zugeordnete
Mittel (12) zur Steuerung der Leistung des Wasserstrahlantriebes der schwimmenden Vorrichtung (200) als Hebel, insbesondere Gashebel, ausgebildet ist, wobei das erste Stellglied (15) einen im Wesentlichen starr ausgebildeten Finger zum Betätigen des der schwimmenden Vorrichtung (200) zugeordneten Mittels (12) zur Steuerung der Leistung des Wasserstrahlantriebes der schwimmenden Vorrichtung (200) aufweist, wobei das erste Stellglied (15) zur Ausübung einer Druckkraft auf das der schwimmenden Vorrichtung (200) zugeordnete Mittel (12) zur Steuerung der Leistung des Wasserstrahlantriebes der schwimmenden Vorrichtung (200) ausgebildet ist.

2. Fernbedienungsvorrichtung (100) gemäß Anspruch **1, dadurch gekennzeichnet, dass** Sender (13) und Empfänger (14) für eine kabelgebundene Verbindung (SO) oder für eine Funkverbindung (51) ausgebildet sind.

3. Fernbedienungsvorrichtung (100) gemäß Anspruch 1 oder 2, **dadurch gekennzeichnet, dass** die Stelleinheit (11) eine Elektronik (19) zur Verarbeitung dervom Empfänger (14) empfangenen Steuerdaten aufweist.

4. Fernbedienungsvorrichtung (100) gemäß einem der vorhergehenden Ansprüche, **dadurch gekennzeichnet, dass** die Steuerdaten Informationen bezüglich der einzustellenden Leistung des Wasserstrahlantriebes der schwimmenden Vorrichtung (200), sowie weitere Informationen bezüglich einer Startfunktion und/oder einer Stoppfunktion und/oder einer Notausfunktion und/oder eines Wechsels zwischen unterschiedlicher Modi, insbesondere Fahrmodi, der schwimmenden Vorrichtung (200) aufweisen.

5. Fernbedienungsvorrichtung (100) gemäß einem der vorhergehenden Ansprüche, **dadurch gekennzeichnet, dass** die Stelleinheit (11) ein erstes lösbares Verbindungsmittel (17) zur Verbindung der Stelleinheit (11) mit der schwimmenden Vorrichtung (200), vorzugsweise zur Verbindung der Stelleinheit (11) mit der schwimmenden Vorrichtung (200) im Bereich des der schwimmenden Vorrichtung (200) zugeordneten Mittels (12) zur Steuerung der Leistung des Wasserstrahlantriebes der schwimmenden Vorrichtung (200), aufweist.

6. Fernbedienungsvorrichtung (100) gemäß einem der vorhergehenden Ansprüche, **dadurch gekennzeichnet, dass** das erste Stellglied (15) zur Ausübung einer Zugkraft auf das der schwimmenden Vorrichtung (200) zugeordnete Mittel (12) zur Steuerung der Leistung des Wasserstrahlantriebes der schwimmenden Vorrichtung (200) ausgebildet ist, wobei das erste Stellglied (15) mittels eines zweiten lösbaren Verbindungsmittels (18) mit dem der schwimmenden Vorrichtung (200) zugeordneten Mittel (12) zur Steuerung der Leistung des Wasserstrahlantriebes der schwimmenden Vorrichtung (200) verbindbar ausgebildet ist oder mit diesem verbunden ist.

7. Fernbedienungsvorrichtung (100) gemäß einem der vorhergehenden Ansprüche, **dadurch gekennzeichnet, dass** die Stelleinheit (11) einen Stellmotor (20), insbesondere einen Servomotor oder einen Seilzugmotor, zur Ansteuerung und/oder Bewegung des ersten Stellglieds (15) aufweist, wobei das erste Stellglied (15) vorzugsweise über einen Arm (21) mit dem Stellmotor (20) verbunden ist.

8. Fernbedienungsvorrichtung (100) gemäß einem der vorhergehenden Ansprüche, **dadurch gekennzeichnet, dass** die Stelleinheit (11) eine erste mechanische Halterung (22) zur Halterung des ersten Stellglieds (15) und/oder eines Stellmotors (20) aufweist, wobei die erste mechanische Halterung (22) mehrere, vorzugsweise mindestens drei, miteinander verbundene Elemente aufweist.

9. Fernbedienungsvorrichtung (100) gemäß Anspruch 8, **dadurch gekennzeichnet, dass** mindestens drei der miteinander verbundenen Elemente der ersten mechanischen Halterung (22) als im Wesentlichen quaderförmige Trägerprofile (23, 24, 25) ausgebildet sind, wobei ein erstes Trägerprofil (23) an einer Längsseite zumindest eine erste Nut (30) zur Aufnahme eines ersten Trägerprofilverbindungsmittels (26) aufweist, wobei ein zweites Trägerprofil (24) an einer Längsseite zumindest eine zweite Nut (31) zur Aufnahme eines zweiten Trägerprofilverbindungsmittels (27) aufweist, wobei ein drittes Trägerprofil (25) an einer Längsseite zumindest eine dritte Nut (32) zur Aufnahme des zweiten Trägerprofilverbindungsmittels (27) aufweist.

10. Fernbedienungsvorrichtung (100) gemäß Anspruch 9, **dadurch gekennzeichnet, dass** das dritte Trägerprofil (25) an einer weiteren Längsseite zumindest eine vierte Nut (33), und vorzugsweise eine im Wesentlichen parallel zur vierten Nut (33) angeordnete fünfte Nut (34), und/oder eine Durchbrechung (29) zur Aufnahme eines Stellmotors (20) aufweist.

11. Fernbedienungsvorrichtung (100) gemäß Anspruch 9 oder 10, **dadurch gekennzeichnet, dass** das erste Trägerprofil (23) an der die erste Nut (30) aufweisenden Längsseite mittels des ersten Trägerprofilverbindungsmittels (26) mit einer Stirnseite des zweiten Trägerprofils (24) verbunden ist, wobei das zweite Trägerprofil (24) in Längsrichtung des ersten Trägerprofils (23) entlang der ersten Nut (30) verschiebbar angeordnet ist.

12. Fernbedienungsvorrichtung (100) gemäß einem der Ansprüche 9 bis 11, **dadurch gekennzeichnet, dass** das zweite Trägerprofil (24) an der die zweite Nut (31) aufweisenden Längsseite mittels des zweiten Trägerprofilverbindungsmittels (27) mit der die dritte Nut (32) aufweisenden Längsseite des dritten Trägerprofils (25) verbunden ist, wobei das dritte Trägerprofil (25) in Längsrichtung des zweiten Trägerprofils (24) entlang der zweiten Nut (31) verschiebbar angeordnet ist.

13. Fernbedienungsvorrichtung (100) gemäß einem der Ansprüche 9 bis 12, **dadurch gekennzeichnet, dass** das erste Trägerprofilverbindungsmittel (26) derart ausgebildet ist, dass das zweite Trägerprofil (24) um seine Längsachse (35) drehbar ist.

14. Fernbedienungsvorrichtung (100) gemäß einem der Ansprüche 9 bis 13, **dadurch gekennzeichnet, dass** das zweite Trägerprofilverbindungsmittel (27) derart ausgebildet ist, dass das dritte Trägerprofil (25) um seine Querachse (36) drehbar ist.

15. Fernbedienungsvorrichtung (100) gemäß einem der vorhergehenden Ansprüche, **dadurch gekennzeichnet, dass** die Stelleinheit (11) ein zweites Stellglied (15a) zur mechanischen Betätigung eines der schwimmenden Vorrichtung (200) zugeordneten Mittels (12a) zur Steuerung einer Startfunktion und/oder Stoppfunktion des Wasserstrahlantriebes der schwimmenden Vorrichtung (200) aufweist, und dass die Stelleinheit (11) vorzugsweise ein drittes Stellglied (15b) zur mechanischen Betätigung eines der schwimmenden Vorrichtung (200) zugeordneten Mittels (12b) zur Steuerung einer Notausfunktion des Wasserstrahlantriebes der schwimmenden Vorrichtung (200) aufweist, und dass die Stelleinheit (11) besonders
bevorzugterweise ein viertes Stellglied (15c) zur mechanischen Betätigung eines der schwimmenden Vorrichtung (200) zugeordneten Mittels (12c) zur Auswahl eines Modus, insbesondere Fahrmodus, des Wasserstrahlantriebes der schwimmenden Vorrichtung (200) aufweist.

16. Fernbedienungsvorrichtung (100) gemäß einem der vorhergehenden Ansprüche, **dadurch gekennzeichnet, dass** die Fernbedienungsvorrichtung (100) eine zweite Bedieneinheit (IOa) zur Aufnahme von Steuerdaten aufweist, wobei die zweite Bedieneinheit (IOa) mittels einer kabelgebundenen Verbindung (SO) und/oder Funkverbindung (51) mit der Stelleinheit (11) zur Übermittlung von Steuerdaten zur Steuerung und/oder Einstellung einer Leistung des Wasserstrahlantriebes der schwimmenden Vorrichtung (200) verbindbar ist.

17. Fernbedienungsvorrichtung (100) gemäß Anspruch 16, **dadurch gekennzeichnet, dass** die zweite Bedieneinheit (IOa) eine höhere Priorität als die erste Bedieneinheit (10) aufweist, wobei einzelne Funktionen der ersten Bedieneinheit (10) von der zweiten Bedieneinheit (IOa) aktivierbar und/oder deaktivierbar sind.

## Claims

1. Remote control device (100) for remote control of a floating device (200) with a water jet propulsion for generating a water jet, wherein the remote control device (100) has a first control unit (10) for receiving control data and an actuating unit (11) for controlling and / or adjusting a power of the water jet propulsion of the floating device (200), wherein the first control unit (10) has a transmitter (13) for forwarding the control data, wherein the actuating unit (11) has a receiver (14) for receiving the control data transmitted by the transmitter (13), **characterized in that** the actuating unit (11) has a first actuator (15) for mechanical actuation of a means (12) associated with the floating device (200) for controlling the power of the water jet propulsion of the floating device (200), wherein the means (12) associated with the floating device (200) for controlling the power of the water jet propulsion of the floating device (200) is formed as a lever, in particular a throttle, wherein the first actuator (15) has a substantially rigid finger for actuating the means (12) associated with the floating device (200) for controlling the power of the water jet propulsion of the floating device (200), wherein the first actuator (15) is configured to exert a compressive force on the means (12) associated with the floating device (200) for controlling the power of the water jet propulsion of the floating device (200).

2. Remote control device (100) according to claim 1, **characterized in that** the transmitter (13) and the receiver (14) are configured for a wired connection (50) or for a radio connection (51).

3. Remote control device (100) according to claim 1 or 2, **characterized in that** the actuating unit (11) has an electronic system (19) for processing the control data received by the receiver (14).

4. Remote control device (100) according to one of the preceding claims, **characterized in that** the control data contains information regarding the power of the water jet propulsion of the floating device (200) to be adjusted, as well as further information regarding a start function and / or a stop function and / or an emergency stop function and / or a change between different modes, in particular driving modes, of the floating device (200).

5. Remote control device (100) according to one of the preceding claims, **characterized in that** the actuating unit (11) has a first detachable connection means (17) for connecting the actuating unit (11) to the floating device (200), preferably for connecting the actuating unit (11) to the floating device (200) in the region of the means (12) associated with the floating device (200) for controlling the performance of the water jet propulsion of the floating device (200).

6. Remote control device (100) according to one of the preceding claims, **characterized in that** the first actuator (15) is configured to exert a pulling force on the means (12) associated with the floating device (200) for controlling the power of the water jet propulsion of the floating device (200), wherein the first actuator (15) is configured connectable or is connected to the means (12) associated with the floating device (200) for controlling the power of the water jet propulsion of the floating device (200) by means of a second detachable connection means (18).

7. Remote control device (100) according to one of the preceding claims, **characterized in that** the actuating unit (11) has an actuating motor (20), in particular a servomotor or a hoisting motor, for controlling and / or moving the first actuator (15), wherein the first actuator (15) is preferably connected with the actuating motor (20) via an arm (21).

8. Remote control device (100) according to one of the preceding claims, **characterized in that** the actuating unit (11) has a first mechanical holder (22) for holding the first actuator (15) and / or an actuating motor (20), wherein the first mechanical holder (22) has a plurality of, preferably at least three, interconnected elements.

9. Remote control device (100) according to claim 8, **characterized in that** at least three of the interconnected elements of the first mechanical holder (22) are formed as substantially box-shaped carrier profiles (23, 24, 25), wherein a first carrier profile (23) on a longitudinal side has at least a first groove (30) for receiving a first carrier profile connecting means (26), wherein a second carrier profile (24) on a longitudinal side has at least a second groove (31) for receiving a second carrier profile connecting means (27), wherein a third carrier profile (25) on a longitudinal side has at least a third groove (32) for receiving the second carrier profile connecting means (27).

10. Remote control device (100) according to claim 9, **characterized in that** the third carrier profile (25) on another longitudinal side has at least a fourth groove (33), and preferably a fifth groove (34) arranged substantially parallel to the fourth groove (33), and/or an opening (29) for receiving an actuating motor (20).

11. Remote control device (100) according to claim 9 or 10, **characterized in that** the first carrier profile (23) on the longitudinal side having the first groove (30) is connected with an end face of the second carrier profile (24) by means of the first carrier profile connecting means (26), wherein the second carrier profile (24) in the longitudinal direction of the first carrier profile (23) is displaceably arranged along the first groove (30).

12. Remote control device (100) according to one of claims 9 to 11, **characterized in that** the second carrier profile (24) on the longitudinal side having the second groove (31) is connected with the longitudinal side of the third carrier profile (25) having the third groove (32) by means of the second carrier profile connecting means (27), wherein the third carrier profile (25) is displaceably arranged in the longitudinal direction of the second carrier profile (24) along the second groove (31).

13. Remote control device (100) according to one of claims 9 to 12, **characterized in that** the first carrier profile connecting means (26) is configured in such a way that the second carrier profile (24) is rotatable about its longitudinal axis (35).

14. Remote control device (100) according to one of claims 9 to 13, **characterized in that** the second carrier profile connecting means (27) is configured in such a way that the third carrier profile (25) is rotatable about its transverse axis (36).

15. Remote control device (100) according to one of the preceding claims, **characterized in that** the actuating unit (11) has a second actuator (15a) for mechanically actuating a means (12a) associated with the floating device (200) for controlling a start function and / or a stop function of the water jet propulsion of the floating device (200), and **in that** the actuating unit (11) preferably has a third actuator (15b) for mechanically actuating a means (12b) associated with the floating device (200) for controlling an emergency stop of the water jet propulsion of the floating device (200), and **in that** the actuating unit (11) particularly preferably has a fourth actuator (15c) for mechanically actuating a means (12c) associated with the floating device (200) for selecting a mode, in particular a driving mode, of the water jet propulsion of the floating device (200).

16. Remote control device (100) according to one of the preceding claims, **characterized in that** the remote control device (100) has a second control unit (10a) for receiving control data, wherein the second control unit (10a) is connectable to the actuating unit (11) for transmitting control data for controlling and / or adjusting a power of the water jet propulsion of the floating device (200) by means of a wired connection (50) and / or radio connection (51).

17. Remote control device (100) according to claim 16, **characterized in that** the second control unit (10a) has a higher priority than the first control unit (10), wherein individual functions of the first control unit (10) can be activated and / or deactivated by the second control unit (10a).

## Revendications

1. Dispositif de télécommande (100), destiné à commander un dispositif flottant (200) pourvu d'un moteur de jet d'eau, apte à générer un jet d'eau, le dispositif de télécommande (100) comportant une première unité opérationnelle (10), destinée à recevoir des données de commande, ainsi qu'une unité de réglage (11) pour commander et/ou régler une puissance du moteur du jet d'eau du dispositif flottant (200), la première unité opérationnelle (10) comportant un émetteur (13) destiné à rediriger les données de commande, l'unité de réglage (11) comportant un récepteur (14) pour la réception des données de commande redirigées par l'émetteur (13), **caractérisé en ce que** l'unité de réglage (11) comporte un premier actionneur (15) pour la manoeuvre mécanique d'un moyen (12) associé au dispositif flottant (200) destiné à commander la puissance du moteur de jet d'eau du dispositif flottant (200), le moyen (12) associé au dispositif flottant (200) destiné à commander la puissance du moteur de jet d'eau du dispositif flottant (200) étant conçu sous la forme d'un levier, notamment d'une manette des gaz, le premier actionneur (15) comportant un doigt, de conformation sensiblement rigide, apte à manoeuvrer le moyen (12) associé au dispositif flottant (200) destiné à commander la puissance du moteur de jet d'eau du dispositif flottant (200), le premier actionneur (15) étant conçu pour exercer une force de pression sur le moyen (12) associé au dispositif flottant (200) destiné à commander la puissance du moteur de jet d'eau du dispositif flottant (200).

2. Dispositif de télécommande (100) selon la revendication 1, **caractérisé en ce que** l'émetteur (13) et le récepteur (14) sont conçus pour une connexion filaire (50) ou pour une connexion radio (51).

3. Dispositif de télécommande (100) selon la revendication 1 ou 2, **caractérisé en ce que** l'unité de réglage (11) comporte un système électronique (19), destiné à traiter les données de commande reçues par le récepteur (14).

4. Dispositif de télécommande (100) selon l'une quelconque des revendications précédentes, **caractérisé en ce que** les données de commande comportent des informations concernant la puissance qui doit être réglée pour le moteur de jet d'eau du dispositif flottant (200), ainsi que des informations additionnelles concernant une fonction de démarrage et/ou une fonction d'arrêt et/ou une fonction d'arrêt d'urgence et/ou un changement entre différents modes, notamment de modes de fonctionnement du dispositif flottant (200).

5. Dispositif de télécommande (100) selon l'une quelconque des revendications précédentes, **caractérisé en ce que** l'unité de réglage (11) comporte un premier moyen d'assemblage (17) amovible, destiné à assembler l'unité de réglage (11) avec le dispositif flottant (200), de préférence à assembler l'unité de réglage (11) avec le dispositif flottant (200) dans la région du moyen (12) associé au dispositif flottant (200) destiné à commander la puissance du moteur de jet d'eau du dispositif flottant (200).

6. Dispositif de télécommande (100) selon l'une quelconque des revendications précédentes, **caractérisé en ce que** le premier actionneur (15) est conçu pour exercer une force de traction sur le moyen (12) associé au dispositif flottant (200) destiné à commander la puissance du moteur de jet d'eau du dispositif flottant (200), le premier actionneur (15) étant conçu de manière à pouvoir être assemblé ou à être assemblé à l'aide d'un deuxième moyen d'assemblage (18) avec le moyen (12) associé au dispositif flottant (200) destiné à commander la puissance du moteur de jet d'eau du dispositif flottant (200).

7. Dispositif de télécommande (100) selon l'une quelconque des revendications précédentes, **caractérisé en ce que** l'unité de réglage (11) comporte un moteur de positionnement (20), notamment un servomoteur ou un moteur à câble de commande, destiné à activer et/ou à déplacer le premier actionneur (15), le premier actionneur (15) étant assemblé de préférence par l'intermédiaire d'un bras (21) avec le moteur de positionnement (20).

8. Dispositif de télécommande (100) selon l'une quelconque des revendications précédentes, **caractérisé en ce que** l'unité de réglage (11) comporte une première attache mécanique (22) destinée à maintenir le premier actionneur (15) et/ou un moteur de positionnement (20), la première attache mécanique (22) comportant plusieurs, de préférence au moins trois éléments assemblés entre eux.

9. Dispositif de télécommande (100) selon la revendication 8, **caractérisé en ce qu'**au moins trois des éléments assemblés entre eux de la première attache mécanique (22) sont conçus sous la forme de profilés de support (23, 24, 25) sensiblement parallélépipédiques, un premier profilé de support (23) comportant sur un côté longitudinal au moins une première rainure (30) destinée au logement d'un premier moyen d'assemblage de profilé de support (26), un deuxième profilé de support (24) comportant sur un côté longitudinal au moins une deuxième rainure (31) destinée au logement d'un deuxième moyen d'assemblage de profilé de support (27), un troisième profilé de support (25) comportant sur un côté longitudinal au moins une troisième rainure (32) destinée au logement du deuxième moyen d'assemblage de profilé de support (27).

10. Dispositif de télécommande (100) selon la revendication 9, **caractérisé en ce que** le troisième profilé de support (25) comporte sur un autre côté longitudinal une quatrième rainure (33) et de préférence une cinquième rainure (34) placée sensiblement à la parallèle de la quatrième rainure (33) et/ou un ajour (29), destiné au logement d'un moteur de positionnement (20).

11. Dispositif de télécommande (100) selon la revendication 9 ou 10, **caractérisé en ce que** sur le côté longitudinal comportant la première rainure (30), le premier profilé de support (23) est assemblé à l'aide du premier moyen d'assemblage de profilé de support (26) avec une face frontale du deuxième profilé de support (24), le deuxième profilé de support (24) étant placé en étant déplaçable dans la direction longitudinale du premier profilé de support (23) le long de la première rainure (30).

12. Dispositif de télécommande (100) selon l'une quelconque des revendications 9 à 11, **caractérisé en ce que** sur le côté longitudinal comportant la deuxième rainure (31), le deuxième profilé de support (24) est assemblé à l'aide du deuxième moyen d'assemblage de profilé de support (27) avec un côté longitudinal du troisième profilé de support (25) comportant la troisième rainure (32), le troisième profilé de support (25) étant placé en étant déplaçable dans la direction longitudinale du deuxième profilé de support (24) le long de la deuxième rainure (31).

13. Dispositif de télécommande (100) selon l'une quelconque des revendications 9 à 12, **caractérisé en ce que** le premier moyen d'assemblage de profilé de support (26) est conçu de telle sorte que le deuxième profilé de support (24) soit rotatif autour de son axe longitudinal (35).

14. Dispositif de télécommande (100) selon l'une quelconque des revendications 9 à 13, **caractérisé en ce que** le deuxième moyen d'assemblage de profilé de support (27) est conçu de telle sorte que le troisième profilé de support (25) soit rotatif autour de son axe transversal (36).

15. Dispositif de télécommande (100) selon l'une quelconque des revendications précédentes, **caractérisé en ce que** l'unité de réglage (11) comporte un deuxième actionneur (15a), pour la manoeuvre mécanique d'un moyen (12a) associé au dispositif flottant (200) destiné à commander une fonction de démarrage et/ou d'arrêt du moteur de jet d'eau du dispositif flottant (200) et **en ce que** l'unité de réglage (11) comporte de préférence un troisième actionneur (15b) pour la manoeuvre mécanique d'un moyen (12b) associé au dispositif flottant (200) destiné à commander une fonction d'arrêt d'urgence du moteur de jet d'eau du dispositif flottant (200) et **en ce que** l'unité de réglage (11) comporte de manière particulièrement préférentielle un quatrième actionneur (15c) pour la manoeuvre mécanique d'un moyen (12c) associé au dispositif flottant (200) destiné à sélectionner un mode, notamment un mode de fonctionnement du moteur de jet d'eau du dispositif flottant(200).

16. Dispositif de télécommande (100) selon l'une quelconque des revendications précédentes, **caractérisé en ce que** le dispositif de télécommande (100) comporte une deuxième unité opérationnelle (10a), destinée à recevoir des données de commande, la deuxième unité opérationnelle (10a) étant susceptible de se connecter à l'aide d'une connexion filaire (50) et/ou d'une connexion radio (51) avec l'unité de réglage (11) pour transmettre des données de commande pour la commande et/ou le réglage d'une puissance du moteur de jet d'eau du dispositif flottant (200).

17. Dispositif de télécommande (100) selon la revendication 16, **caractérisé en ce que** la deuxième unité opérationnelle (10a) dispose d'une priorité plus élevée que la première unité opérationnelle (10), des fonctions individuelles de la première unité opérationnelle (10) étant activables et/ou désactivables par la deuxième unité opérationnelle (10a).
